# EUROPEAN PATENT SPECIFICATION

(11) **EP 4 246 790 B1**
(45) Date of publication and mention of the grant of the patent: **28.01.2026**
(21) Application number: 21921817.9
(22) Date of filing: 28.01.2021
(51) Int. Cl.: H02M 1/36, H02M 3/00, H02M 1/00, H02M 1/32, H02M 3/158, H02M 7/487

(54) **CONVERSION CIRCUIT, PRE-CHARGING CONTROL METHOD FOR CONVERSION CIRCUIT, AND PHOTOVOLTAIC SYSTEM**
WANDLERSCHALTUNG, VORLADESTEUERUNGSVERFAHREN FÜR DIE WANDLERSCHALTUNG UND FOTOVOLTAISCHES SYSTEM
CIRCUIT DE CONVERSION, PROCÉDÉ DE COMMANDE DE PRÉCHARGE POUR CIRCUIT DE CONVERSION ET SYSTÈME PHOTOVOLTAÏQUE

(43) Date of publication of application: 20.09.2023
(73) Proprietor: Huawei Digital Power Technologies Co., Ltd., Shenzhen, Guangdong 518043 (CN)
(72) Inventor: XU, Fuqiang, Shenzhen, Guangdong 518129 (CN); WANG, Jun, Shenzhen, Guangdong 518129 (CN); YU, Xinyu, Shenzhen, Guangdong 518129 (CN); XIN, Kai, Shenzhen, Guangdong 518129 (CN); SHI, Lei, Shenzhen, Guangdong 518129 (CN)
(74) Representative: Körber, Martin Hans
(86) International application number: PCT/CN2021/074236
(87) International publication number: WO 2022/160207

(56) References cited:
- EP-A2- 2 709 257
- WO-A1-2017/090118
- CN-A- 108 631 340
- CN-A- 108 683 332
- CN-A- 109 088 535
- CN-A- 109 510 485
- CN-A- 109 660 119
- CN-A- 112 134 453
- US-A1- 2017 018 933
- US-A1- 2020 412 239
- US-B1- 7 859 870
- STEVANOVIC BRANISLAV ET AL: "900V SiC Based, Hybrid, Multilevel DC/DC Topology for 1500VDC PV Application", 2019 IEEE APPLIED POWER ELECTRONICS CONFERENCE AND EXPOSITION (APEC), IEEE, 17 March 2019 (2019-03-17), pages 6 - 12, XP033555194, DOI: 10.1109/APEC.2019.8722152

## Description

### TECHNICAL FIELD

This application relates to the field of electronic technologies, and in particular, to a conversion circuit, a conversion circuit precharge control method, and a photovoltaic system.

### BACKGROUND

A conventional direct current converter generally transfers energy by using a magnetic element, for example, an inductor or a transformer, so that the conventional direct current converter operates in a hard switching state. The hard switching state causes a large loss of a switch in the direct current converter, reducing operating efficiency of the direct current converter. In addition, the magnetic element, for example, the inductor or the transformer, has a large volume. Therefore, power density of the conventional direct current converter is low.

To improve performance of a direct current converter, a new direct current converter, for example, a resonant switched capacitor converter (RSCC), is proposed. In the RSCC, a resonant unit is used to transfer energy, so that a power switch device in the RSCC can operate in a soft switching state, thereby improving operating efficiency of the RSCC. The resonant unit usually includes a resonant inductor and a resonant capacitor, and has a smaller volume than the magnetic element, for example, the inductor or the transformer, in the conventional direct current converter. Therefore, the RSCC also has higher power density.

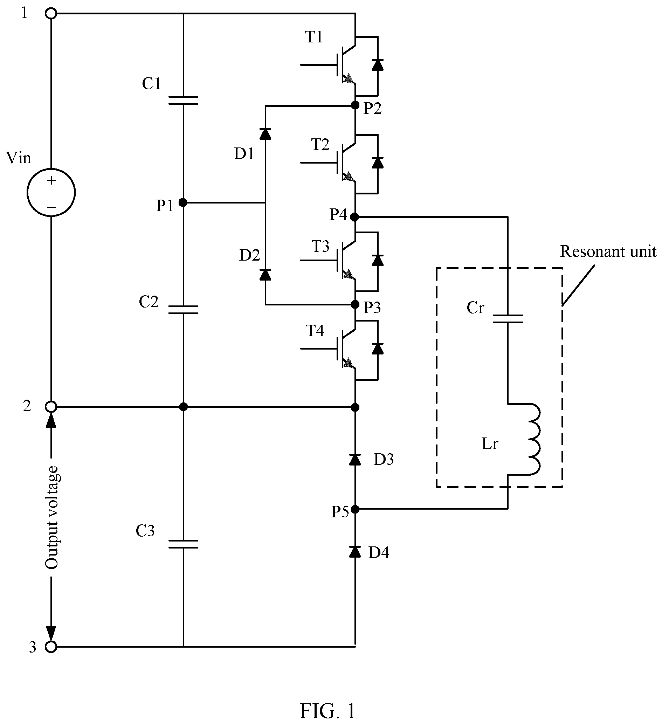

The RSCC may be used in a voltage conversion application scenario, for example, boost conversion, buck conversion, or voltage polarity conversion. Usually, the RSCC includes a plurality of switching transistors (switches), a plurality of capacitors, a plurality of diodes, and a resonant unit. The resonant unit usually includes a resonant inductor and a resonant capacitor. FIG. 1 is a diagram of a topology of an RSCC circuit. After an input voltage is supplied to the RSCC, a target voltage can be output by controlling on/off states of the plurality of switches. Before the RSCC enters an operating state for outputting the target voltage, a voltage of an output filter capacitor is approximately zero. At a moment when the RSCC enters the operating state, a current generated by the resonant inductor in the resonant unit causes impact to a power switching transistor in the RSCC, affecting performance of the switching transistor and degrading operating performance of the RSCC.
CN 109660119 A discloses a resonant switched capacitor converter. The resonant switched capacitor converter comprises a first switch, a second switch, a first diode, a seconddiode, a third diode, a fourth diode, a first resonant capacitor, a second resonant capacitor, a resonant inductor and an energy storage capacitor. The resonant switched capacitor converter provided by the invention has a switching frequency greater than a resonant frequency and less than 2 times the resonant frequency, realizes a "charge balancing" mode in which two sets of resonant currents exist simultaneously, can realize ZVS turning-on of a switching tube and ZCS turning-off of a diode, and can achieve the purpose of wide-range linear voltage regulation.
CN112134453A discloses a control method for a starting process of a DC/DC converter. The method comprises determining a duty ratio or frequency of a driving signal at least according to a peak voltage reference value and a peak voltage detection value of a switching tube on the low-voltage side; and outputting the driving signal to the switching tube so as to control the switching tube to act.
CN108683332A discloses a high-gain and wide-duty cycle control Boost converter characterized in that a clamping absorption unit 1 is composed of a clamping diode D1 and a clamping capacitor C1; a clamping absorption unit 2 is composed of a clamping diode D2 and a clamping capacitor C2; a pressure doubling unit 1 is composed of a capacitor C3, a diode D3 and a secondary winding L1b of a coupling inductor T1; a pressure doubling unit 2 is composed of a capacitor C4, a diode D6 and a secondary winding L2b of a coupling inductor T2.
EP 2709257A2 discloses a power converter circuit has a resonant capacitor that is arranged in resonant branch which is connected in parallel to a circuit branch. An output capacitor is connected in parallel with a circuit branch in which the series arrangement of the third and fourth diodes is arranged. A switching element is electrically connected in parallel to the first or third diodes, and another switching element is electrically connected in parallel with the second or fourth diodes.

### SUMMARY

This application provides a conversion circuit, a conversion circuit precharge control method, and a photovoltaic system, to avoid additional costs, and avoid impact on a switch caused by a current generated in a circuit at a moment when an RSCC enters an operating state, thereby ensuring operating performance of the RSCC.

According to a first aspect, this application provides a conversion circuit, including a first power supply, a resonant switched capacitor converter(RSCC), and a control circuit. The RSCC includes a switch unit, an output filter unit, a first input end S1, a second input end S2, and an output end S3. The switch unit is connected between the first input end S1 and the second input end S2. The output filter unit is connected between the second input end S2 and the output end S3. One electrode of the first power supply is connected to the first input end S1, and the other electrode of the first power supply is connected to the second input end S2. The first power supply is configured to supply an input voltage to the RSCC. The control circuit is connected to the switch unit, and is configured to: before controlling the RSCC to operate, control the switch unit in the RSCC to transmit, to the output filter unit, electric energy supplied by the first power supply.

In this embodiment of this application, the RSCC in the conversion circuit may be used in a direct current-direct current conversion scenario, for example, in a direct current-direct current conversion circuit, and may perform boost conversion, buck conversion, polarity conversion, or the like. The control circuit in the conversion circuit may control the RSCC to operate. Before controlling the RSCC to operate, the control circuit controls the switch unit in the RSCC to transmit, to the output filter unit, the electric energy supplied by the first power supply, to increase a voltage of the output filter unit. The voltage of the output filter unit is not zero because electric energy is stored in the output filter unit. At a moment when the control circuit controls the RSCC to operate, a current formed in the circuit is weak, and has weak impact on the switch unit in the RSCC, thereby ensuring performance of the switch unit. The control circuit controls the switch unit in the RSCC, so that the first power supply can charge the output filter unit, thereby increasing the voltage of the output filter unit, and ensuring power density of the RSCC without adding an additional charging circuit.

The RSCC further includes a resonant unit and a clamping unit. The clamping unit and the output filter unit are connected in parallel. The switch unit is connected to an end of the resonant unit, and another end of the resonant unit is connected to the clamping unit. When controlling the switch unit in the RSCC to transmit, to the output filter unit, the electric energy supplied by the first power supply, the control circuit is specifically configured to: control the switch unit to transmit, to the resonant unit, the electric energy supplied by the first power supply; and control the switch unit to transmit the electric energy in the resonant unit to the output filter unit.

In this embodiment of this application, the control circuit controls the switch unit to transmit, to the resonant unit, the energy supplied by the first power supply, so that the first power supply can charge the resonant unit; and then control the switch unit to transmit the electric energy in the resonant unit to the output filter unit, so that the resonant unit can charge the output filter unit. Because electric energy is stored in the resonant unit and the output filter unit, a voltage of the resonant unit is not zero, and the voltage of the output filter unit is not zero, thereby reducing a current formed in the circuit at a moment when the RSCC starts to operate.

In a possible design, when the control circuit controls the switch unit to transmit, to the resonant unit, the electric energy supplied by the first power supply, the first power supply, the switch unit, the resonant unit, and the clamping unit form a first path, an open circuit occurs between the switch unit and the second input end S2, and an open circuit occurs between the clamping unit and the output end S3; and when the control circuit controls the switch unit to transmit the electric energy in the resonant unit to the output filter unit, the switch unit, the resonant unit, the clamping unit, and the output filter unit form a second path, and an open circuit occurs between the clamping unit and the second input end S2.

In this embodiment of this application, the resonant unit in the RSCC may serve as an energy transfer unit. In a process of controlling the switch unit to transmit, to the output filter unit, the electric energy supplied by the first power supply, the control circuit may first control the switch unit, so that the first power supply, the switch unit, the resonant unit, and the clamping unit form the first path, and the first power supply may charge the resonant unit through the first path. Then the control circuit controls the switch unit, so that the switch unit, the resonant unit, the clamping unit, and the output filter unit form the second path, and the resonant unit may charge the output filter unit through the second path.

In a possible design, the RSCC further includes an input filter unit, and the input filter unit and the switch unit are connected in parallel. The input filter unit is configured to store the electric energy supplied by the first power supply. The input filter unit includes a first input filter subunit and a second input filter subunit. The first input filter subunit and the second input filter subunit are connected in series. An end at which the first input filter subunit and the second input filter subunit are connected is connected to the switch unit. When controlling the switch unit to transmit, to the resonant unit, the electric energy supplied by the first power supply, the control circuit is specifically configured to: control the switch unit to transmit, to the resonant unit, electric energy supplied by the first power supply to the first input filter subunit; or control the switch unit to transmit, to the resonant unit, electric energy supplied by the first power supply to the first input filter subunit and electric energy supplied by the first power supply to the second input filter subunit.

In this embodiment of this application, the input filter unit and the switch unit are connected in parallel, and the input filter unit is connected between the two electrodes of the first power supply. The first power supply may supply the electrical energy to the input filter unit. The input filter unit may also store the electric energy supplied by the first power supply. The input filter unit in the RSCC may include a plurality of input filter subunits. In a process of controlling the switch unit to transmit, to the resonant unit, the electric energy supplied by the first power supply, the control circuit may use one or more input filter subunits in the input filter unit as an energy transfer unit. The control circuit may control the switch unit to transmit electric energy in the one or more input filter subunits to the resonant unit. For example, energy in the first input filter subunit is transmitted to the resonant unit, thereby alleviating impact on the switch unit caused by a current generated in a process of charging the resonant unit. The control circuit uses one or more input filter subunits in the input filter unit as an energy transfer unit, and can flexibly charge the resonant unit in a fine-grained manner.

In a possible design, when the control circuit controls the switch unit to transmit, to the resonant unit, the electric energy supplied by the first power supply to the first input filter subunit, a third path is formed by the first input filter subunit, the switch unit, the resonant unit, and the clamping unit, an open circuit occurs between the switch unit and the first input end S1, an open circuit occurs between the switch unit and the second input end S2, and an open circuit occurs between the clamping unit and the output filter unit.When the control circuit controls the switch unit to transmit, to the resonant unit, the electric energy supplied by the first power supply to the first input filter subunit and the electric energy supplied by the first power supply to the second input filter subunit, the control circuit controls the switch unit to transmit the electric energy in the first input filter subunit and the electric energy in the second input filter subunit to the resonant unit, where a fourth path is formed by the first input filter subunit, the second input filter subunit, the switch unit, the resonant unit, and the clamping unit, an open circuit occurs between the switch unit and the second input end S2, and an open circuit occurs between the clamping unit and the output filter unit.

In this embodiment of this application, the control circuit controls the switch unit, so that the third path is formed by the first input filter subunit, the switch unit, the resonant unit, and the clamping unit. The first input filter subunit may charge the resonant unit through the third path. The control circuit controls the switch unit, so that the fourth path is formed by the first input filter subunit, the second input filter subunit, the switch unit, the resonant unit, and the clamping unit. The first input filter subunit and the second input filter subunit may charge the resonant unit through the fourth path.

In a possible design, the control circuit is further configured to control the switch unit to transmit the electric energy in the first input filter subunit to the output filter unit.

In this embodiment of this application, the control circuit may control the switch unit, so that the resonant unit may charge the output filter unit. The control circuit may further control the switch unit, so that the first input filter subunit charges the output filter unit. The control circuit may use an input filter subunit in the input filter unit as an energy transfer unit, for example, use the first input filter subunit to charge the output filter unit, so that the control circuit can flexibly charge the output filter unit in a fine-grained manner, to protect an element in the conversion circuit.

In a possible design, when the control circuit controls the switch unit to transmit the electric energy in the resonant unit to the output filter unit, the resonant unit, the switch unit, the output filter unit, and the clamping unit form a fifth path, an open circuit occurs between the switch unit and the first input filter subunit, and an open circuit occurs between the switch unit and the second input end S2.

In this embodiment of this application, the control circuit may use the resonant unit in the RSCC as an energy transfer unit. After the resonant unit is charged, the control circuit may control the switch unit, so that the resonant unit, the switch unit, the output filter unit, and the clamping unit form the fifth path. The resonant unit may charge the output filter unit through the fifth path.

In a possible design, when the control circuit controls the switch unit to transmit the electric energy in the first input filter subunit to the output filter unit, the first input filter subunit, the switch unit, the resonant unit, the clamping unit, and the output filter unit form a sixth path, an open circuit occurs between the switch unit and the second input end S2, an open circuit occurs between the switch unit and the first input end S1, and an open circuit occurs between the clamping unit and the second input end S2.

In this embodiment of this application, the control circuit may use the resonant unit and the first input filter subunit in the RSCC as energy transfer units. The control circuit controls the switch unit, so that the first input filter subunit, the switch unit, the resonant unit, the clamping unit, and the output filter unit form the sixth path. The first input filter subunit and the resonant unit may charge the output filter unit.

In a possible design, the first power supply includes at least one photovoltaic string and a first direct current-direct current boost circuit. A positive electrode of the at least one photovoltaic string is connected to a positive input end of the first direct current-direct current boost circuit, and a negative electrode of the at least one photovoltaic string is connected to a negative input end of the first direct current-direct current boost circuit. A positive output end of the first direct current-direct current boost circuit is connected to the first input end S1, and a negative output end of the first direct current-direct current boost circuit is connected to the second input end S2. The first direct current-direct current boost circuit is configured to convert a voltage supplied by the at least one photovoltaic string into the input voltage.

In this embodiment of this application, the conversion circuit may be applied to a photovoltaic power generating scenario. The first power supply may include a photovoltaic string and a first direct current-direct current boost circuit. Before controlling the RSCC to operate, the control circuit controls the switch unit in the RSCC to transmit, to the output filter unit, the electric energy supplied by the first power supply, thereby ensuring operating performance of the switch unit in the RSCC, and ensuring operating performance of the conversion circuit in the photovoltaic power generating scenario.

According to a second aspect, this application provides a photovoltaic system, including at least one conversion circuit according to the first aspect, a plurality of photovoltaic strings, at least one second direct current-direct current boost circuit, and a direct current-alternating current inverter circuit. A positive output end of each second direct current-direct current boost circuit is connected to a positive input end of the direct current-alternating current inverter circuit. A negative output end of the second direct current-direct current boost circuit is separately connected to a second input end S2 of an RSCC in one conversion circuit and a zero-level end of the direct current-alternating current inverter circuit. Negative output ends of second direct current-direct current boost circuits are connected to second input end S2 of RSCC in different conversion circuits. An output end S3 of an RSCC in each conversion circuit is connected to a negative input end of the direct current-alternating current inverter circuit. A positive input end of each second direct current-direct current boost circuit is connected to a positive electrode of at least one photovoltaic string. A negative input end of the second direct current-direct current boost circuit is connected to a negative electrode of the at least one photovoltaic string. Each second direct current-direct current boost circuit is configured to perform boost processing on a voltage supplied by a connected photovoltaic string to obtain a first input voltage, and supply the first input voltage to the direct current-alternating current inverter circuit. During operating, the RSCC in the conversion circuit supplies a second input voltage to the direct current-alternating current inverter circuit. An output end of the direct current-alternating current inverter circuit is connected to a power grid, to convert the first input voltage and the second input voltage into alternating-current voltage, and supply the alternating-current voltage to the power grid.

In this embodiment of this application, the photovoltaic system includes any conversion circuit according to the first aspect, and during operating, the RSCC in the conversion circuit may supply the second input voltage to the direct current-alternating current inverter circuit in the photovoltaic system. Before controlling the RSCC to operate, a control circuit in the conversion circuit may control a switch unit in the RSCC to transmit, to an output filter unit in the RSCC, electric energy supplied by a first power supply, to avoid impact on the switch unit caused by a current generated in the circuit at a moment when the RSCC enters an operating state, thereby ensuring operating performance of the switch unit, operating performance of the RSCC, and operating performance of the photovoltaic system, without additional costs of a charging circuit, a control switch, or the like.

According to a third aspect, an embodiment of this application provides a conversion circuit precharge control method, applied to a conversion circuit. The conversion circuit includes a first power supply and a resonant switched capacitor converter(RSCC). The RSCC includes a switch unit and an output filter unit. The RSCC shares the same structure as the RSCC mentioned above in the first aspect. The method may be performed by a control circuit or a controller, and the method includes: before controlling the RSCC to operate, controlling, by the control circuit, the switch unit to transmit, to the output filter unit, electric energy supplied by the first power supply. If determining that a voltage of the output filter unit is greater than a preset threshold, the control circuit controls the RSCC to operate.

In this embodiment of this application, before controlling the RSCC to operate, the control circuit controls the switch unit in the RSCC to transmit, to the output filter unit, the electric energy supplied by the first power supply, to increase the voltage of the output filter unit. The voltage of the output filter unit is not zero because electric energy is stored in the output filter unit. At a moment when the control circuit controls the RSCC to operate, a current formed in the circuit is weak, and has weak impact on the switch unit in the RSCC, thereby ensuring performance of the switch unit. The control circuit controls the switch unit in the RSCC, so that the first power supply can charge the output filter unit, thereby increasing the voltage of the output filter unit, and ensuring power density of the RSCC without adding an additional charging circuit.

The RSCC further includes a resonant unit, and the controlling the switch unit to transmit, to the output filter unit, electric energy supplied by the first power supply includes: controlling, by the control circuit, the switch unit to transmit, to the resonant unit, the electric energy supplied by the first power supply, and controlling, by the the control circuit, the switch unit to transmit the electric energy in the resonant unit to the output filter unit.

In this embodiment of this application, the control circuit controls the switch unit to transmit, to the resonant unit, the energy supplied by the first power supply, so that the first power supply can charge the resonant unit; and then control the switch unit to transmit the electric energy in the resonant unit to the output filter unit, so that the resonant unit can charge the output filter unit. Because electric energy is stored in the resonant unit and the output filter unit, a voltage of the resonant unit is not zero, and the voltage of the output filter unit is not zero, thereby reducing a current formed in the circuit at a moment when the RSCC starts to operate.

In a possible design, the RSCC further includes an input filter unit, the input filter unit includes a first input filter subunit and a second input filter subunit, and the method further includes: The control circuit controls the switch unit to transmit electric energy in the first input filter subunit to the output filter unit.

In this embodiment of this application, the control circuit may further control the switch unit, so that the first input filter subunit charges the output filter unit. The control circuit may use an input filter subunit in the input filter unit as an energy transfer unit, for example, use the first input filter subunit to charge the output filter unit, so that the control circuit can flexibly charge the output filter unit in a fine-grained manner, to protect an element in the conversion circuit.

In a possible design, the controlling the switch unit to transmit, to the resonant unit, the electric energy supplied by the first power supply includes: The control circuit controls the switch unit to transmit, to the resonant unit, electric energy supplied by the first power supply to the first input filter subunit; or the control circuit controls the switch unit to transmit, to the resonant unit, electric energy supplied by the first power supply to the first input filter subunit and electric energy supplied by the first power supply to the second input filter subunit.

In this embodiment of this application, in a process of controlling the switch unit to transmit, to the resonant unit, the electric energy supplied by the first power supply, the control circuit may use one or more input filter subunits in the input filter unit as an energy transfer unit. The control circuit may control the switch unit to transmit electric energy in the one or more input filter subunits to the resonant unit. For example, energy in the first input filter subunit is transmitted to the resonant unit, thereby alleviating impact on the switch unit caused by a current generated in a process of charging the resonant unit. The control circuit uses one or more input filter subunits in the input filter unit as an energy transfer unit, and can flexibly charge the resonant unit in a fine-grained manner.

According to a further aspect, this application provides a computer-readable storage medium. The computer-readable storage medium includes a computer program. When the computer program is run on a processor, the processor is enabled to perform the technical solution according to any one of the third aspect or the possible designs of the third aspect.

According to a further aspect, this application provides a computer program product. When the computer program product is run on an electronic device, the electronic device is enabled to perform the technical solution according to any one of the third aspect or the possible designs of the third aspect.

### BRIEF DESCRIPTION OF DRAWINGS

FIG. 1 is a schematic diagram of a structure of a conversion circuit including an RSCC;
FIG. 2 is a schematic diagram of a structure of a conversion circuit capable of precharging an RSCC;
FIG. 3 is a schematic diagram of a structure of a conversion circuit;
FIG. 4 is a schematic diagram of a path in a conversion circuit in a charging process;
FIG. 5 is a schematic diagram of a path in a conversion circuit in a charging process;
FIG. 6 is a schematic diagram of a structure of a conversion circuit;
FIG. 7 is a schematic diagram of a structure of a conversion circuit;
FIG. 8 is a schematic diagram of a path in a conversion circuit in a charging process;
FIG. 9 is a schematic diagram of a path in a conversion circuit in a charging process;
FIG. 10 is a schematic diagram of a path in a conversion circuit in a charging process;
FIG. 11 is a schematic diagram of a path in a conversion circuit in a charging process;
FIG. 12 is a schematic diagram of a path in a conversion circuit in a charging process;
FIG. 13 is a schematic diagram of a structure of a conversion circuit;
FIG. 14A, FIG. 14B, and FIG. 14C are a schematic flowchart of a conversion circuit precharge method;
FIG. 15A, FIG. 15B, and FIG. 15C are a schematic flowchart of a conversion circuit precharge method;
FIG. 16 is a schematic diagram of a path in a conversion circuit in a charging process;
FIG. 17 is a schematic diagram of a path in a conversion circuit in a charging process;
FIG. 18 is a schematic diagram of a path in a conversion circuit in a charging process;
FIG. 19 is a schematic diagram of a path in a conversion circuit in a charging process;
FIG. 20 is a schematic diagram of a structure of a power supply;
FIG. 21 is a schematic diagram of a structure of a photovoltaic system; and
FIG. 22 is a schematic diagram of a structure of a photovoltaic system.

### DESCRIPTION OF EMBODIMENTS

A photovoltaic power generating system, an electric vehicle, and a renewable energy system impose increasing requirements on an electronic power converter. A conventional direct current converter generally transfers energy by using a magnetic element, for example, an inductor or a transformer. Because the direct current converter operates in a hard switching state, a loss of a switch in the conventional direct current converter is large, and operating efficiency is low. In addition, performance of a system in which the direct current converter is used is also affected. For example, performance of a photovoltaic power generating system is affected.

The magnetic element, for example, the inductor or the transformer, in the conventional direct current converter has a large volume. Therefore, power density of the conventional direct current converter is low. Different from the conventional direct current converter, an RSCC is a new direct current converter. In the RSCC, a resonant unit including a resonant inductor and a resonant capacitor is used to transfer energy. Usually, the resonant unit has a small volume, and therefore the RSCC has high power density. The resonant unit may further enable a power switch device in the RSCC to operate in a soft switching state, thereby improving operating efficiency of the RSCC, and improving performance of a system in which the RSCC is used.

The RSCC may be used in a direct current-direct current conversion circuit, and may perform voltage conversion, for example, boost conversion, buck conversion, or voltage polarity conversion, on a direct-current voltage, and output a converted direct-current voltage. Usually, the RSCC includes a plurality of switching transistors (switches), a plurality of capacitors, a plurality of diodes, and a resonant unit. After an input voltage is supplied to the RSCC, a target voltage is output by controlling off states of a plurality of switches.

FIG. 1 shows a topology of a conversion circuit including an RSCC. The conversion circuit includes a power supply (an input voltage is Vin) and the RSCC. The RSCC includes three connection endpoints: a first input endpoint 1 and a second input endpoint 2, and an output endpoint 3. One terminal of the power supply is connected to the first input endpoint 1, and the other terminal of the power supply is connected to the second input endpoint 2 (FIG. 1 shows an example in which a positive electrode of the power supply is connected to the first input endpoint 1 and a negative electrode of the power supply is connected to the second input endpoint 2). The RSCC includes: a first branch formed by a filter capacitor C1, a filter capacitor C2, and an output filter capacitor C3 that are connected in series, a second branch formed by a switch T1, a switch T2, a switch T3, a switch T4, a diode D3, and a diode D4 that are connected in series, a diode D1, a diode D2, and a resonant unit. The resonant unit includes a resonant capacitor Cr and a resonant inductor Lr that are connected in series.

In the first branch, an end of the filter capacitor C1 is connected to the first input endpoint 1, and another end of the filter capacitor C1 is connected to the filter capacitor C2. An end of the output filter capacitor C3 is connected to the filter capacitor C2, and another end of the output filter capacitor C3 is connected to the output endpoint 3.

In the second branch, an end of the switch T1 is connected to the first input endpoint 1, and another end of the switch T1 is connected to the switch T2. An end of the switch T4 is connected to the switch T3, and another end of the switch T4 is connected to a cathode of the diode D3. An anode of the diode D3 is connected to a cathode of the diode D4, and an anode of the diode D4 is connected to the output endpoint 3.

A node P1 is disposed between the filter capacitor C1 and the filter capacitor C2. A node P2 is disposed between the switch T1 and the switch T2. A node P3 is disposed between the switch T3 and the switch T4. A node P4 is disposed between the switch T2 and the switch T3. A node P5 is disposed between the diode D3 and the diode D4. An anode of the diode D1 is separately connected to the node P1 and a cathode of the diode D2, and a cathode of the diode D1 is connected to the node P2. An anode of diode D2 is connected to the node P3. The resonant unit is connected between the node P4 and the node P5.

Control terminals of the switch T1, the switch T2, the switch T3, and the switch T4 in the RSCC may be connected to a control circuit. The control circuit may transmit a drive signal or a pulse signal to the switch, to control the switch to be in an on state or in an off state. The control circuit may further transmit, at different control timings and based on a preset control timing and a drive signal for a switch that corresponds to each control timing, the drive signal corresponding to the control timing to the switch, so that the RSCC is in an operating state, to convert an input voltage into a target output voltage.

Before the RSCC enters the operating state, a voltage of the output filter capacitor C3 is approximately zero, and a voltage of the resonant capacitor Cr is also approximately zero. At a moment when the RSCC starts to operate, a current generated by the resonant inductor Lr causes impact to a power element, for example, a switch. This affects performance of the switch element, and degrades operating performance of the RSCC.

To avoid impact on each switch caused by the current generated by the resonant inductor Lr at the moment when the RSCC starts to operate, power elements, for example, the output filter capacitor and the resonant capacitor, in the RSCC may be charged before the control circuit controls the RSCC to enter the operating state, thereby reducing the current generated by the resonant inductor Lr at the moment when the RSCC starts to operate, and alleviating impact of the current on each switch.

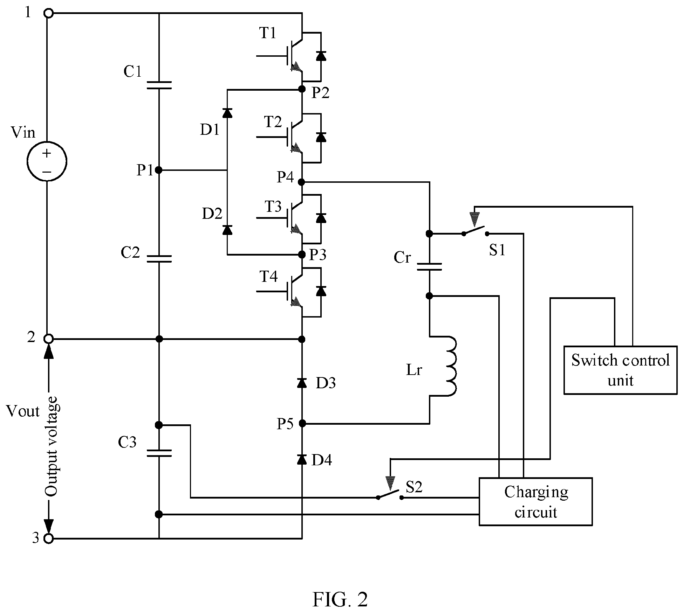

As shown in FIG. 2, a charging circuit and a switch control unit are connected to the RSCC. The charging circuit may charge the output filter capacitor C3, and may also charge the resonant capacitor Cr. The switch control unit may control the charging circuit to separately charge the output filter capacitor C3 and the resonant capacitor Cr, so that voltages of the output filter capacitor C3 and the resonant capacitor Cr are not zero before the RSCC enters the operating state. The charging circuit and the switch control unit are added, to avoid impact on each switch caused by the current formed by the resonant inductor Lr when the RSCC is in the operating state. However, in this charging mode, costs of the conversion circuit are increased, and an area of the conversion circuit is also increased, decreasing power density of the conversion circuit.

Based on the foregoing problem, an embodiment of this application provides a method for charging an output filter capacitor in an RSCC. The method may be applied to a conversion circuit including an RSCC, to avoid additional costs, and avoid impact on a switch caused by a current generated in the circuit at a moment when the RSCC enters an operating state, thereby ensuring operating performance of the RSCC.

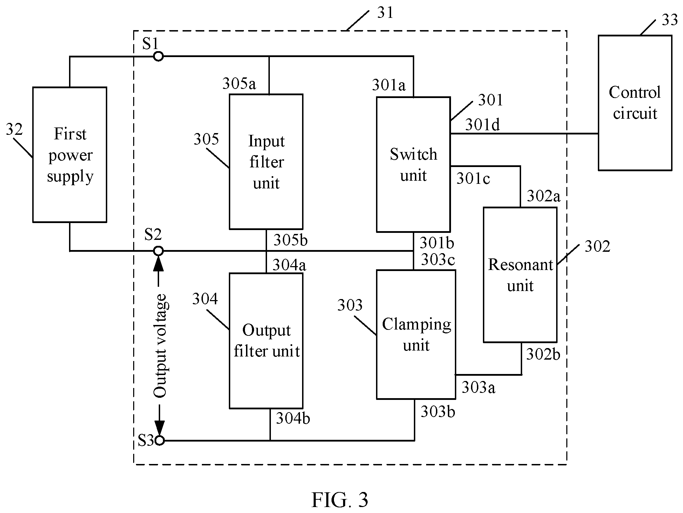

As shown in FIG. 3, a conversion circuit provided in an embodiment of this application may include an RSCC 31, a first power supply 32, and a control circuit 33. The RSCC 31 may include a switch unit 301, an output filter unit 304, a first input end S1, a second input end S2, and an output end S3. The switch unit 301 may be connected between the first input end S1 and the second input end S2. The control circuit 33 is connected to the switch unit 301, and may control the switch unit 301.

The output filter unit 304 may be connected between the second input end S2 and the output end S3. The output filter unit 304 may include at least one capacitor, for example, an output filter capacitor.

Two electrodes of the first power supply 32 are respectively connected to the first input end S1 and the second input end S2 of the RSCC 31. For example, a positive electrode of the first power supply 32 is connected to the first input end S1, and a negative electrode of the first power supply 32 is connected to the second input end S2. The first power supply 32 may supply electric energy to the RSCC 31.

The control circuit 33 may be used in the method for charging an output filter capacitor in an RSCC in this application. Before controlling the RSCC to operate, the control circuit 33 may control the switch unit 301 to transmit, to the output filter unit 304, the electric energy supplied by the first power supply. In this embodiment of this application, that the control circuit 33 controls the RSCC 31 to operate may be controlling the RSCC 31 to be in an operating state. For example, the RSCC 31 is controlled to convert an input voltage supplied by the first power supply 32 into a target voltage, which is also referred to as a target output voltage. The target voltage may be output to a load, for example, an inverter circuit, through the second input end S2 and the output end S3 of the RSCC 31. The RSCC 31 may be applied to a boost conversion, buck conversion, or polarity conversion scenario, or the like. In the boost conversion scenario, a value of the target voltage may be greater than that of the input voltage. In the buck conversion scenario, a value of the target voltage may be less than that of the input voltage. In the polarity conversion scenario, the target voltage and the input voltage may have a same absolute value and opposite polarities. The RSCC 31 may also be applied to other voltage conversion scenarios. The scenarios are not listed one by one herein.

The control circuit 33 may be implemented as a controller. The control circuit 33 may also include a plurality of control units, and different control units may be configured to control the RSCC to be in different operating states. For example, a first control unit is configured to control the RSCC 31 to be in an operating state, and a second control unit is configured to: before the RSCC 31 operates, control the switch unit 301 to transmit, to the output filter unit 304, the electric energy supplied by the first power supply 32. A process of controlling, by the control circuit 33 before the RSCC 31 operates, the switch unit 301 to transmit, to the output filter unit 304, the electric energy supplied by the first power supply 32 may be considered as controlling the RSCC 31 to be in a precharge state.

In this embodiment of this application, the control circuit 33 may control the switch unit 301 to transmit, to the output filter unit 304, the electric energy supplied by the first power supply 32, so that the first power supply 32 charges the output filter unit 304 in the RSCC 31. The control circuit 33 may transmit (or supply) a control signal or a drive signal to the switch unit 301. When receiving the control signal or the drive signal, the switch unit 301 may transmit, to the output filter unit 304, the electric energy supplied by the first power supply 32. Alternatively, when receiving no control signal or drive signal, the switch unit 301 may not transmit, to the output filter unit 304, the electric energy supplied by the first power supply 32.

To prevent an excessively large current in the circuit during charging from affecting performance of a switch in the switch unit 301, the control circuit 33 may further control duration of transmitting, by the switch unit 301 to the output filter unit 304, the electric energy supplied by the first power supply 32. For example, the control circuit 33 continuously transmits a control signal or a drive signal to the switch unit 301 within preset duration. The switch unit 301 continuously transmits, to the output filter unit 304 within the preset duration, the electric energy supplied by the first power supply 32. The preset duration may be less than one control period.

A voltage increase status of the output filter unit 304 varies with the duration of charging the output filter unit 304. In other words, voltage increase statuses at two ends of the output filter unit vary as the duration of transmitting, by the control circuit 33, the control signal or the drive signal to the switch unit 301 varies. For example, the control circuit may continuously transmit a control signal or a drive signal to the switch unit 301 within first duration, or the control circuit may continuously transmit a control signal or a drive signal to the switch unit 301 within second duration. If the first duration and the second duration have different values, a voltage increase that occurs after the output filter unit 304 is charged for the first duration is different from a voltage increase that occurs after the output filter unit 304 is charged for the second duration.

In a possible implementation, the control circuit 33 may control, a plurality of times, the switch unit 301 to transmit the electric energy of the first power supply 32 to the output filter unit 304, so that the output filter unit 304 can be charged a plurality of times. Duration of controlling, by the control circuit 33 each time, the switch unit 301 to transmit the electric energy of the first power supply 32 to the output filter unit 304 may be the same or vary. In other words, the control circuit 33 may continuously transmit a control signal or a drive signal to the switch unit 301 in a same time period or different time periods in each control period, so that the switch unit 301 transmits the electric energy of the first power supply 32 to the output filter unit 304.

After the output filter unit 304 is charged, a voltage is not zero, thereby alleviating impact on the switch unit 301 caused by a current generated at a moment when the RSCC 31 enters the operating state. It can be learned that, in the method for charging an output filter capacitor in an RSCC in this embodiment of this application, performance of a power element in the conversion circuit and power density of the conversion circuit can be ensured, without increasing costs of the conversion circuit.

The RSCC 31 further includes a resonant unit 302 and a clamping unit 303. The clamping unit 303 and the output filter unit 304 are connected in parallel. The clamping unit 303 may be configured to prevent a voltage at the second input end S2 from changing.

The switch unit 301 is connected to an end of the resonant unit 302, and another end of the resonant unit 302 is connected to the clamping unit 303. The resonant unit 302 may include a resonant capacitor and a resonant inductor that are connected in series. The resonant unit 302 may be configured to transfer energy, so that a switch device in the switch unit 301 operates in a soft switching state.

The RSCC 31 may also include an input filter unit 305. The input filter unit 305 and the switch unit 301 are connected in parallel, and the input filter unit 305 may be configured to: when the RSCC 31 is in the operating state, stabilize the input voltage supplied by the first power supply 32. The input filter unit 305 may include at least one capacitor connected in series. The input filter unit 305 is connected between the two electrodes of the first power supply 32. The first power supply 32 may directly supply electric energy to the input filter unit 305, and the input filter unit 305 may also be configured to store the electric energy supplied by the first power supply 32.

In this embodiment of this application, a first end 301a of the switch unit 301 is separately connected to the first input end S1 of the RSCC 31 and an input end 305a of the input filter unit 305. A second end 301b of the switch unit 301 is connected to the second input end S2. A third end 301c of the switch unit 301 is connected to a first end 302a of the resonant unit 302. A fourth end 301d of the switch unit 301 may be connected to the control circuit 33.

A second end 302b of the resonant unit 302 is connected to a first input end 303a of the clamping unit 303. A second input end 303b of the clamping unit 303 is connected to the output end S3 of the RSCC 31. An output end 303c of the clamping unit 303 is connected to the second input end S2 of the RSCC 31.

The input end 305a of the input filter unit 305 is separately connected to the first input end S1 and the first end 301a of the switch unit 301. An output end 305b of the input filter unit 305 is separately connected to the second input end S2 and an input end 304a of the output filter unit 304. The input end 304a of the output filter unit 304 is separately connected to the output end 305b of the input filter unit 305 and the second input end S2. An output end 304b of the output filter unit 304 is connected to the output end S3 of the RSCC 31.

In this embodiment of this application, the resonant unit 302 may be further configured to transfer electric energy, in other words, the resonant unit 302 serves as an energy transfer unit (an energy relay unit, an energy relay assembly, or an energy relay module). When controlling the switch unit 301 in the RSCC 31 to transmit, to the output filter unit 304, the electric energy supplied by the first power supply 32, the control circuit 33 may control the switch unit 301 to transmit, to the resonant unit 302, the electric energy supplied by the first power supply 32, so that the first power supply 32 can charge the resonant unit 302; and then control the switch unit 301 to transmit the electric energy in the resonant unit 302 to the output filter unit 304, so that the resonant unit 302 can charge the output filter unit 304. It should be understood that the resonant unit 302 may serve as an energy transfer medium to be charged by the first power supply 32. The resonant unit 302 may also supply electric energy to the output filter unit 304 after being charged, to charge the output filter unit 304.

A voltage of the output filter unit 304 is not zero because the output filter unit 304 is charged. After the resonant unit 302 charges the output filter unit 304, the electric energy in the resonant unit 302 decreases, and a voltage decreases. Although the voltage of the resonant unit 302 decreases, a voltage value of the resonant unit 302 is still greater than zero. At a moment when the RSCC 31 enters the operating state, the resonant inductor in the resonant unit 302 generates a weak current, thereby alleviating impact on the switch unit 301. It can be learned that, in the conversion circuit provided in this embodiment of this application, the control circuit 33 controls the switch unit 301, so that the output filter unit 304 and the resonant unit 302 in the RSCC 31 are charged, thereby ensuring performance of a switch element in the conversion circuit and power density of the conversion circuit. In addition, the resonant capacitor and the output filter capacitor in the RSCC are charged by using an element in the conversion circuit, without additional costs.

The switch unit 301 may include a plurality of switches connected in series. In this embodiment of this application, when the control circuit 33 controls the switch unit 301 to transmit, to the resonant unit 302, the electric energy supplied by the first power supply 32, the control circuit 33 may control an on/off status of each switch in the switch unit 301, so that the first power supply 32, the switch unit 301, the resonant unit 302, and the clamping unit 303 form a first path, an open circuit occurs between the switch unit 301 and the second input end S2, and an open circuit occurs between the second input end 303b of the clamping unit 303 and the output end S3. The first end 302a of the resonant unit 302 is connected to one electrode of the first power supply 32 through the switch unit 301, the second end 302b of the resonant unit 302 is connected to the other electrode of the first power supply 32 through the clamping unit 303, and the first power supply 32 may charge the resonant unit 302.

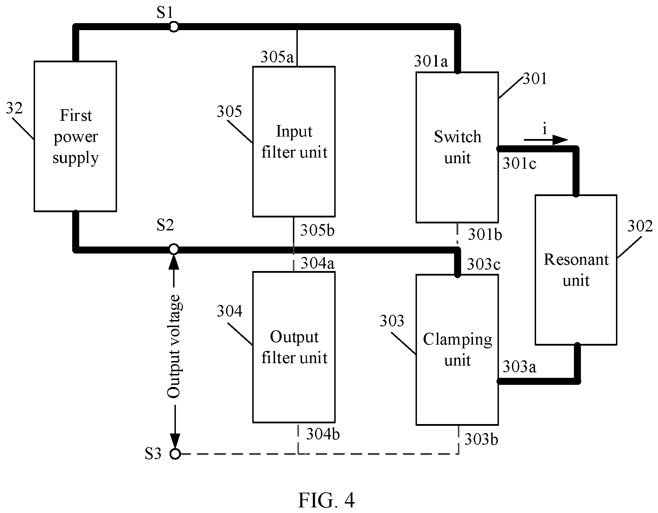

In a process of charging the resonant unit 302 by the first power supply 32, an open circuit occurs between the second input end 303b of the clamping unit 303 and the output end 304b of the output filter unit 304, and a current in the first path does not flow to the output filter unit 304, so that an open circuit can occur at each of two ends of the output filter unit 304. FIG. 4 shows a path and an open circuit status in the RSCC 31 in the process of charging the resonant unit 302 by the first power supply 32, where a bold line indicates the first path in the RSCC 31, and a dashed line indicates the open circuit status in the RSCC 31.

In a possible implementation, the control circuit 33 may control, a plurality of times, the switch unit 301 to transmit, to the resonant unit 302, the electric energy supplied by the first power supply 32, so that the resonant unit 302 is charged a plurality of times. After the resonant unit 302 charges the output filter unit 304, the voltage decreases. To further reduce the current generated by the inductor in the resonant unit 302 at the moment when the RSCC 31 enters the operating state, the control circuit 33 may control the switch unit 301 again to transmit, to the resonant unit 302, the electric energy supplied by the first power supply 32, so that the first power supply 32 charges the resonant unit 302 again.

Duration of charging the resonant unit 302 each time may be the same or vary. The control circuit 33 may control the switch unit 301 to continuously transmit, to the resonant unit 302 within preset duration, the electric energy supplied by the first power supply 32, to control the duration of charging the resonant unit 302 to be the preset duration. The preset duration may be less than duration corresponding to one control period. For example, the duration corresponding to one control period may be 55 microseconds, and the preset duration may be 1.8%×55 microseconds, or the preset duration may be 2%×55 microseconds.

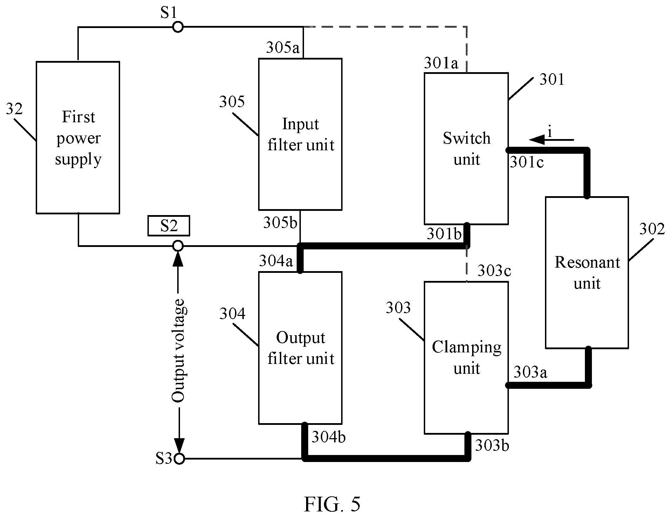

When the control circuit 33 controls the switch unit 301 to transmit the electric energy in the resonant unit 302 to the output filter unit 304, the control circuit 33 may control an on/off status of each switch in the switch unit 301, so that the switch unit 301, the resonant unit 302, the clamping unit 303, and the output filter unit 304 form a second path, the second end 301b of the switch unit 301 is connected to the second input end S2, and an open circuit occurs between the output end 303c of the clamping unit 303 and the second input end S2. The resonant unit 302 stores the electric energy supplied by the first power supply 32. Because the voltage of the output filter unit 304 is approximately zero, after the second path is formed, the resonant unit 302 discharges, so that the resonant unit 302 charges the output filter unit 304. FIG. 5 shows a path and an open circuit status in the RSCC 31 in a process of charging the output filter unit 304 by the resonant unit 302, where a bold line indicates the second path in the RSCC 31, and a dashed line indicates the open circuit status in the RSCC 31.

The output filter unit 304 may also be charged a plurality of times. The control circuit 33 may control, a plurality of times, the switch unit 301 to transmit the electric energy in the resonant unit 302 to the output filter unit 304. After the resonant unit 302 is charged again, the control circuit 33 may control the switch unit 301 to transmit the electric energy in the resonant unit 302 to the output filter unit 304. Duration of charging the output filter unit 304 each time may be the same or vary.

In an example, after the resonant unit 302 charges the output filter unit 304, the control circuit 33 may determine whether the voltage of the resonant unit 302 is within a first voltage range. If the voltage of the resonant unit 302 is less than a minimum value within the first voltage range, the control circuit 33 may control the switch unit 301 to transmit, to the resonant unit 302, the electric energy supplied by the first power supply 32.

In this embodiment of this application, the first voltage range may also be determined based on a voltage supplied by the first power supply 32. A value within the first voltage range may be any value close to a half voltage value 0.5Vin of an input voltage Vin of the first power supply 32. For example, the minimum value within the first voltage range may be 0.48Vin, and the first voltage range may be [0.48Vin, Vin]. Alternatively, the first voltage range may include inconsecutive values, for example, {0.48Vin, 0.485Vin, 0.5Vin, 0.51Vin}. In this embodiment of this application, a value range close to the half voltage value 0.5Vin of the input voltage Vin of the first power supply 32 may be configured based on a parameter of an element in the RSCC.

In another example, after the resonant unit 302 charges the output filter unit 304, the control circuit 33 may alternatively determine whether the voltage of the output filter unit 304 is greater than or equal to a preset voltage value. If voltages at the two ends of the output filter unit 304 are greater than or equal to the preset voltage value, the control circuit 33 may determine that charging of the output filter unit 304 in the RSCC 31 is completed. In this embodiment of this application, the preset voltage value may be the input voltage Vin.

After determining that the charging of the output filter unit 304 is completed, the control circuit 33 may further control the RSCC 31 to enter the operating state to output the target voltage. After determining that the charging of the output filter unit 304 is completed, the control circuit 33 may also determine whether the voltage of the resonant unit 302 is within a first voltage range. If the voltage of the resonant unit 302 is less than a minimum value within the first voltage range, the control circuit 33 may control, once or a plurality of times, the switch unit 301 to transmit, to the resonant unit 302, the electric energy supplied by the first power supply 32, so that the voltage of the resonant unit 302 is greater than or equal to the minimum value within the first voltage range. If the control circuit 33 determines that the voltage of the output filter unit 304 is greater than or equal to the preset voltage value and the voltage of the resonant unit 302 is greater than or equal to the minimum value within the first voltage range, the control circuit 33 may determine that charging of the output filter unit 304 and the resonant unit 302 is completed, and then control the RSCC 31 to enter the operating state to output the target voltage.

In a possible implementation, the switch unit 301 may include at least two switches, two of the at least two switches are connected in series, a first node is disposed on a connection line between the two switches, and the first node may serve as the third end 301c of the switch unit 301. The switch in this embodiment of this application may be a power switching transistor, for example, a field effect transistor. In accompanying drawings in this embodiment of this application, an example in which the switch is a field effect transistor with a parasitic diode is used, but is not intended to limit a specific form of the switch in this embodiment of this application.

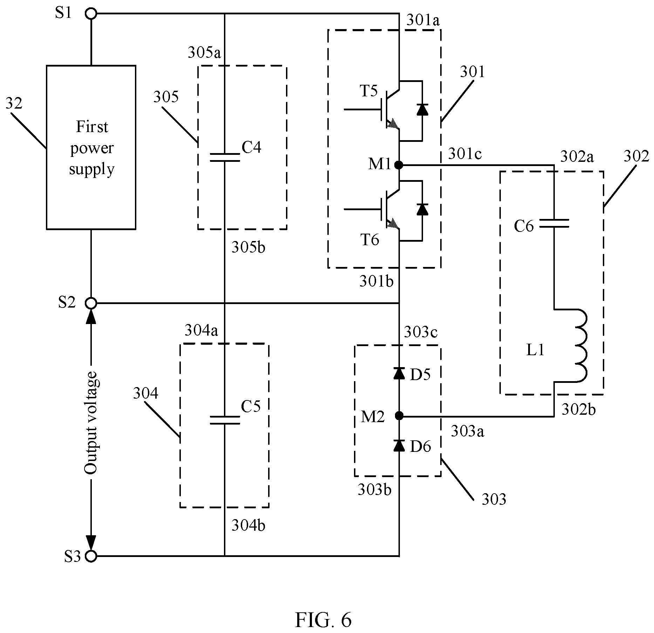

In an example, the switch unit 301 may include two switches connected in series. As shown in FIG. 6, the switch unit 301 includes a switch T5 and a switch T6. Anend of the switch T5, that is not connected to the switch T6 may serve as the first end 301a of the switch unit 301. An end, of the switch T6, that is not connected to the switch T5 may serve as the second end 301b of the switch unit 301. A first node M1 in the switch unit is disposed on a connection line between the switch T6 and the switch T5, and may serve as the third end 301c of the switch unit 301. The first node M1 is connected to the first end 302a of the resonant unit 302.

In this embodiment of this application, the clamping unit 303 may include two diodes connected in series, and a second node M2 is disposed on a connection line between the two diodes, and serves as the first input end 303a of the clamping unit 303. The second node M2 is separately connected to an anode of one diode and a cathode of the other diode. In the two diodes, a diode whose cathode is connected to the second node M2 may be a first diode, and an anode of the first diode may serve as the second input end 303b of the clamping unit 303 and is connected to the output end S3 of the RSCC 31. The other diode is a second diode, an anode of the second diode is connected to the second node M2, and a cathode of the second diode may serve as the output end 303c of the clamping unit 303 and is connected to the second input end S2 of the RSCC 31.

As shown in FIG. 6, the clamping unit 303 includes a diode D5 and a diode D6 that are connected in series, an anode of the diode D5 is connected to a cathode of the diode D6, a cathode of the diode D5 is the output end 303c of the clamping unit 303, the anode of the diode D5 may serve as the first input end 303a of the clamping unit 303, and an anode of the diode D6 is the second output end 303b of the clamping unit 303.

The resonant unit 302 is connected between the first node M1 and the second node M2. Because the diode has a forward conduction characteristic, when a current output by the resonant unit 302 flows through the second node M2, the cathode of the diode D6 is connected to the second node M2, the current cannot flow to the diode D6, and the diode D6 is in a cut-off state, so that an open circuit can occur between the second input end 303b of the clamping unit 303 and the output end S3 of the RSCC 31.

In an example, the clamping unit 303 may alternatively include one diode and a switch, and the diode and the switch are connected in series. The second node M2 is disposed on a connection line between the diode and the switch, and serves as the first input end 303a of the clamping unit 303. An end, of the switch, that is not connected to the second node M2 may serve as the second input end 303b of the clamping unit 303. A cathode of the diode may serve as the output end 303c of the clamping unit 303. The control circuit 33 may control an on/off status of the switch. The control circuit 33 may control the switch in the clamping unit 303 to be in an off state, so that an open circuit can occur between the second input end 303b of the clamping unit 303 and the output end S3 of the RSCC 31. Alternatively, the control circuit 33 may control the switch in the clamping unit 303 to be in an on state, so that the second input end 303b of the clamping unit 303 can be connected to the output end S3 of the RSCC 31.

It should be understood that the clamping unit 303 may alternatively include another element, to implement a role or a function of the clamping unit 303 in the RSCC 31 in this embodiment of this application. This is not particularly limited in this embodiment of this application.

The resonant inductor and the resonant capacitor in the resonant unit 302 may be connected in series. As shown in FIG. 6, the resonant unit 302 may include a capacitor C6 and an inductor L1 that are connected in series. An end, of the capacitor C6, that is not connected to the inductor L1 may serve as the first end 302a of the resonant unit 302. An end, of the inductor L1, that is not connected to the capacitor C6 serves as the second end 302b of the resonant unit 302. The second end 302b of the resonant unit 302 may be connected to the second node M2 between the diode D5 and the diode D6. The first end 302a of the resonant unit 302 may be connected to the first node M1 between the switch T5 and the switch T6.

The input filter unit 305 may include a capacitor C4. The output filter unit 304 may include a capacitor C5. The control circuit 33 may be connected to each of the at least two switches in the switch unit 301, and the control circuit 33 may control an on/off status of each switch. The control circuit 33 may control on/off statuses of the at least two switches in the switch unit 301, so that the first power supply 32, the switch unit 301, the resonant unit 302, and the clamping unit 303 form the first path, an open circuit occurs between the switch unit 301 and the second input end S2, an open circuit occurs between the clamping unit 303 and the output end S3 of the RSCC 31, and the first power supply 32 is controlled to charge the resonant unit 302 and the input filter unit 305.

For example, the switch unit 301 may include two switches: a switch T5 and a switch T6. The control circuit 33 is separately connected to the switch T5 and the switch T6. The control circuit 33 may control the switch T5 in the switch unit 301 to be switched on and the switch T6 in the switch unit 301 to be switched off, and an electrode of the first power supply 32 is connected to the resonant unit 302 through the switch T5 in the switch unit 301. The resonant capacitor C6 in the resonant unit 302 is different, so that an induced current generated by the resonant inductor L1 is input to the clamping unit 303, and then flows to the other electrode of the first power supply 32 through the diode D5 in the clamping unit 303. In this way, the second end 302b of the resonant unit 302 is connected to the other electrode of the first power supply through the diode D5 in the clamping unit 303, and the first power supply 32, the switch unit 301, the resonant unit 302, and the clamping unit 303 form the first path. The electric energy supplied by the first power supply 32 is transmitted to the resonant unit 302 through the switch T5 in the switch unit 301, so that the first power supply 32 can charge the resonant capacitor C6 in the resonant unit 302. The two electrodes of the first power supply 32 are respectively connected to two ends of the capacitor C4 in the input filter unit 305, and the capacitor C4 may store the electric energy supplied by the first power supply 32.

In this embodiment of this application, the control circuit 33 may further control the switch T5 to be switched off, and control the switch T6 to be switched on, and the capacitor C6 in the resonant unit 302 is connected to the input end 305a of the input filter unit 305 through the switch T6 in the switch unit 301. The output end 304b of the output filter unit 304 is connected to the inductor L1 in the resonant unit 302 through the diode D6 in the clamping unit 303, so that the second path is formed by the resonant unit 302, the switch unit 301, the output filter unit 304, and the clamping unit 303. Electric energy in the resonant capacitor C6 in the resonant unit 302 may be transmitted to the output filter unit 304 through the switch T6 in the switch unit 301, so that the resonant unit 302 can charge the output filter unit 304.

In this embodiment of this application, in a process of charging the output filter unit 304, the control circuit 33 may use the resonant unit 302 as an intermediate medium for transmitting energy a plurality of times. The control circuit 33 may control on/off statuses of the switch T5 and the switch T6 in the switch unit 301 in a plurality of control periods, to control the switch unit 301 to transmit, to the output filter unit 304, the electric energy supplied by the first power supply 32.

In the plurality of control periods, the control circuit 33 may enable, based on a preset control operation in each control period, the switch unit 301 to transmit, to the output filter unit 305, the electric energy supplied by the first power supply 32.

In a first control period, the control circuit 33 may perform a control operation of continuously transmitting a control signal or a drive signal to the switch T5. For example, the control circuit 33 may supply a pulse signal whose pulse width is preset duration to the switch T5 in the first control period. After receiving the pulse signal, the switch T5 enters an on state until the pulse ends. The switch T6 receives no pulse signal, and is in an open-circuit state. Duration of the first control period may be 55 microseconds, and the preset duration may be 1.8%×55 microseconds, or the preset duration may be 2%×55 microseconds. The control circuit 33 may perform a control operation of continuously transmitting a control signal or a drive signal to the switch T5 in a first half period of the first control period, or the control circuit 33 may perform a control operation of continuously transmitting a control signal or a drive signal to the switch T5 in a last half period of the first control period. The switch T5 is in the on state, the switch T6 is in the off state, and the electric energy supplied by the first power supply 32 is transmitted to the resonant unit 302 through the switch T5.

In a second control period, the control circuit 33 may perform a control operation of continuously transmitting a control signal or a drive signal to the switch T6. For example, the control circuit 33 may supply a pulse signal whose pulse width is preset duration to the switch T6 in the second control period. After receiving the pulse signal, the switch T6 enters an on state until the pulse ends. The switch T5 receives no pulse signal, and is in an open-circuit state. Duration of the second control period may be 55 microseconds, and the preset duration may be 1.8%×55 microseconds, or the preset duration may be 2%×55 microseconds. The control circuit 33 may perform a control operation of continuously transmitting a control signal or a drive signal to the switch T6 in a first half period of the second control period, or the control circuit 33 may perform a control operation of continuously transmitting a control signal or a drive signal to the switch T6 in a last half period of the secondcontrol period. The switch T6 is in the on state, the switch T5 is in the off state, and the electric energy in the resonant unit 302 is transmitted to the output filter unit 304 through the switch T6.

The plurality of control periods may include at least one first control period and at least one second control period. The control circuit 33 performs different control operations in different control periods. The control circuit 33 performs different control operations in different periods, so that the first power supply 32 can charge the resonant unit 302 and then the resonant unit 302 charges the output filter unit 304, where these two charging processes are performed alternately.

In an actual application scenario, the control circuit 33 may determine voltages at two ends of an element by using a conditioning circuit connected in parallel to the element. For example, a voltage of the capacitor C5 in the output filter unit 304 is determined by using a conditioning circuit connected in parallel to the capacitor C5. Alternatively, the control circuit 33 may determine voltages at two ends of an element by using an analog/digital sampling circuit connected in parallel to the element, for example, determine a voltage of the capacitor C6 in the resonant unit 302 by using an analog/digital sampling circuit connected in parallel to the capacitor.

The input filter unit 305 may also store the electric energy supplied by the first power supply 32. In a scenario in which the input filter unit 305 may include a plurality of input filter subunits, the control circuit 33 may alternatively use an input filter subunit in the input filter unit 305 as an energy transfer medium.

The control circuit 33 may control the switch unit 301 to transmit electric energy in the input filter subunit to the resonant unit 302, so that the input filter subunit in the input filter unit 305 charges the resonant unit 302. A voltage at which the input filter subunit charges the resonant unit 302 is less than the input voltage supplied by the first power supply 32, and a spike current generated during charging is small, thereby alleviating current impact on a switch in the circuit.

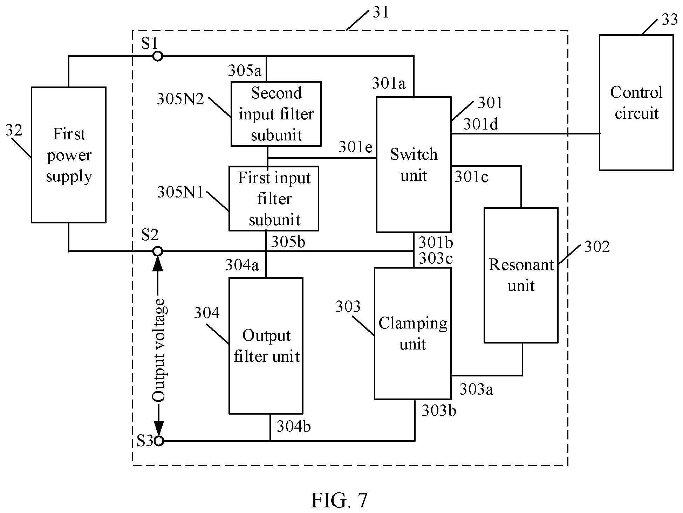

An example in which the input filter unit 305 includes two input filter subunits is used for description below. As shown in FIG. 7, the two input filter subunits in the input filter unit 305 are denoted as a first input filter subunit 305N1 and a second input filter subunit 305N2. The first input filter subunit 305N1 and the second input filter subunit 305N2 are connected in series. An input end of the second input filter subunit 305N2 is connected to the first input end S1 of the RSCC 31, and an output end of the second input filter subunit 305N2 is connected to an input end of the first input filter subunit 305N1. An output end of the first input filter subunit 305N1 is separately connected to the second input end S2 and the input end 304a of the output filter unit 304. In this embodiment of this application, the first input filter subunit 305N1 may include at least one capacitor connected in series, and the second input filter subunit 305N2 may include at least one capacitor connected in series.

The first end 301a of the switch unit 301 is separately connected to the first input end S1 of the RSCC 31 and the input end of the second input filter subunit 305N2. The second end 301b of the switch unit 301 is connected to the second input end S2. The third end 301c of the switch unit 301 is connected to the first end 302a of the resonant unit 302. The fourth end 301d of the switch unit 301 may be connected to the control circuit 33. The control circuit 33 may control the switch unit 301. A fifth end 301e of the switch unit 301 is separately connected to the output end of the second input filter subunit 305N2 and the input end of the first input filter subunit 305N1. In other words, the fifth terminal 301e of the switch unit 301 is connected between the first input filter subunit 305N1 and the second input filter subunit 305N2.

The first end 302a of the resonant unit 302 is connected to the third end 301c of the switch unit 301, and the second end 302b of the resonant unit 302 is connected to the first input end 303a of the clamping unit 303. The first input end 303a of the clamping unit 303 is connected to the second end 302b of the resonant unit 302. The second input end 303b of the clamping unit 303 is connected to the output end S3 of the RSCC 31. The output end 303c of the clamping unit 303 is connected to the second input end S2 of the RSCC 31.

The input end 304a of the output filter unit 304 is separately connected to the output end 305b of the input filter unit 305 and the second input end S2. The output end 304b of the output filter unit 304 is connected to the output end S3 of the RSCC 31. The output filter unit 304 may include at least one capacitor connected in series. The two electrodes of the first power supply 32 are respectively connected to the first input end S1 and the second input end S2 of the RSCC 31.

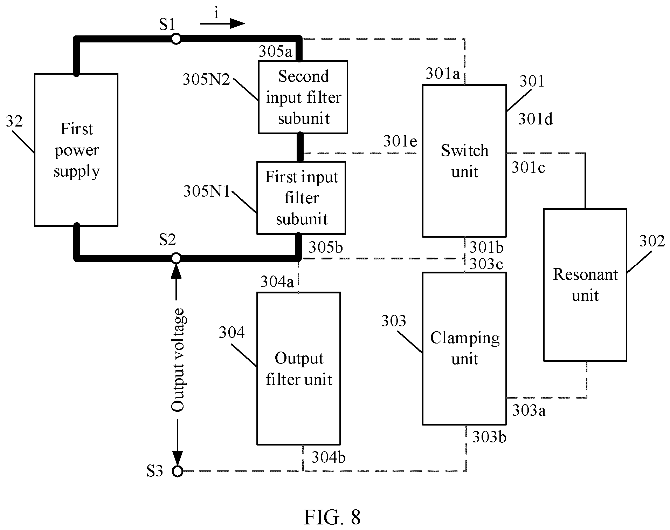

Before the control circuit 33 controls the switch unit 301 to transmit, to the resonant unit 302, the electric energy supplied by the first power supply 32, the control circuit 33 may control an open circuit to occur between the switch unit 301 and the first input end S1 and an open circuit to occur between the switch unit 301 and the second input end S2, so that the switch unit 301 stops transmitting electric energy. A path is formed by the first power supply 32, the first input filter subunit 305N1, and the second input filter subunit 305N2, and the first power supply 32 may charge the first input filter subunit 305N1 and the second input filter subunit 305N2. For example, the control circuit 33 may control an open circuit to occur between the switch unit 301 and the second input filter subunit 305N2 and an open circuit to occur between the switch unit 301 and the second input end S2 of the RSCC 31, in other words, the control circuit 33 controls an open circuit to occur between the switch unit 301, the resonant unit 302, the clamping unit 303, and the output filter unit 304 in the RSCC 31, so that the first input filter subunit 305N1 and the second input filter subunit 305N2 are connected in series between the two electrodes of the first power supply 32, and the first power supply 32 charges the first input filter subunit 305N1 and the second input filter subunit 305N2. FIG. 8 shows a path and an open circuit status in the conversion circuit in a process of charging the first input filter subunit 305N1 and the second input filter subunit 305N2, where a bold line indicates an on part, and a dashed line indicates an open-circuit part.

When the control circuit 33 controls the switch unit 301 to transmit, to the resonant unit 302, the electric energy supplied by the first power supply 32, the control circuit 33 may control the switch unit 301 to transmit electric energy in any one of the first input filter subunit 305N1 and the second input filter subunit 305N2 to the resonant unit. For example, the control circuit 33 controls the switch unit 301 to transmit the electric energy in the first input filter subunit 305N1 to the resonant unit 302, so that the first input filter subunit 305N1 can charge the resonant unit 302. The electrical energy in the first input filter subunit 305N1 is less than the electrical energy supplied by the first power supply 32, and the first input filter subunit 305N1 charges the resonant unit 302, thereby reducing a current generated in the circuit.

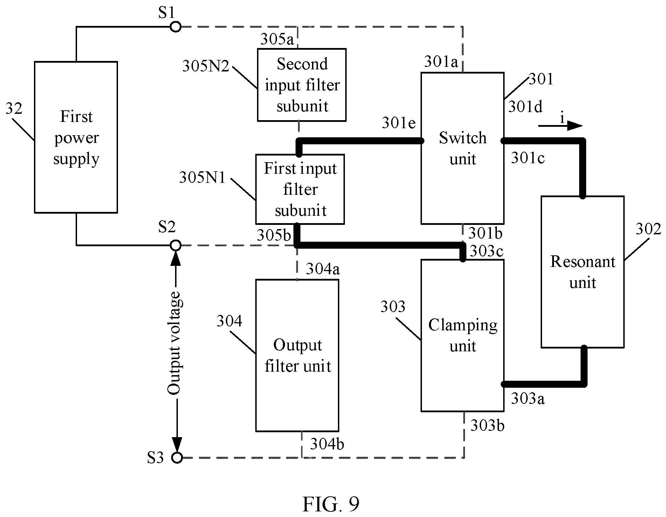

When the control circuit 33 controls the switch unit 301 to transmit the electric energy in the first input filter subunit 305N1 to the resonant unit 302, the control circuit 33 may control an on/off status of each switch in the switch unit 301, so that a fourth path is formed by the first input filter subunit 305N1, the switch unit 301, the resonant unit 302, and the clamping unit 303, an open circuit occurs between the switch unit 301 and the first input end S1, an open circuit occurs between the switch unit 301 and the second input end S2 of the RSCC 31, an open circuit occurs between the clamping unit 303 and the output filter unit 304, and the first input filter subunit 305N1 may charge the resonant unit 302 through the fourth path. FIG. 9 shows a path and an open circuit status in the RSCC 31 in a process of charging the resonant unit 302 by the first input filter subunit 305N1, where a bold line indicates the fourth path, and a dashed line indicates an open-circuit part. In this embodiment of this application, the resonant unit 302 is charged by some of a plurality of input filter units, thereby alleviating impact of a current on an element in the RSCC 31 in a charging process, and further protecting an element in the conversion circuit.

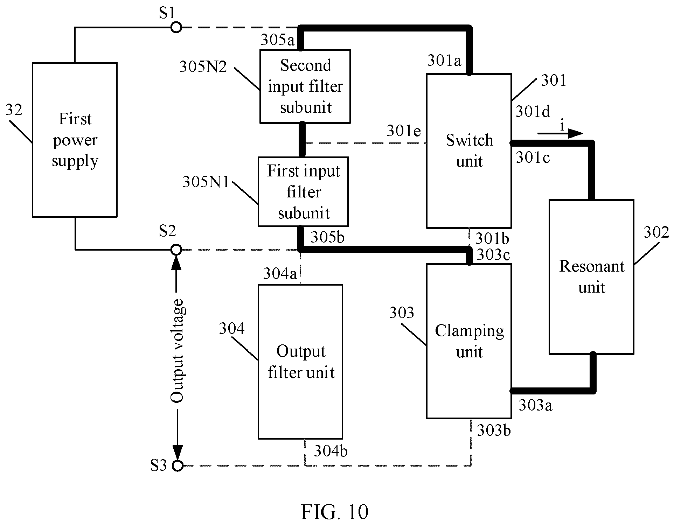

When the control circuit 33 controls the switch unit 301 to transmit, to the resonant unit 302, the electric energy supplied by the first power supply 32, the control circuit 33 may alternatively control the switch unit 301 to transmit electric energy in the first input filter subunit 305N1 and the second input filter subunit 305N2 to the resonant unit 302 for charging. The control circuit 33 may control an on/off status of each switch in the switch unit 301, so that a fifth path is formed by the first input filter subunit 305N1, the second input filter subunit 305N2, the switch unit 301, the resonant unit 302, and the clamping unit 303, and control an open circuit to occur between the switch unit 301 and the second input end S2 of the RSCC 31, and an open circuit to occur between the clamping unit 303 and the output filter unit 304. The first input filter subunit 305N1 and the second input filter subunit 305N2 may charge the resonant unit 302 through the fifth path. FIG. 10 shows a path and an open circuit status in the RSCC 31 in a process of jointly charging the resonant unit 302 by the first input filter subunit 305N1 and the second input filter subunit 305N2, where a bold line indicates the fifth path, and a dashed line indicates an open-circuit part.

When the control circuit 33 controls the switch unit 301 to transmit, to the resonant unit 302, the electric energy supplied by the first power supply 32. A path is formed by the first power supply 32, the switch unit 301, the resonant unit 302, and the clamping unit 303, an open circuit occurs between the switch unit 301 and the second input end S2, and an open circuit occurs between the clamping unit 303 and the output end S3.

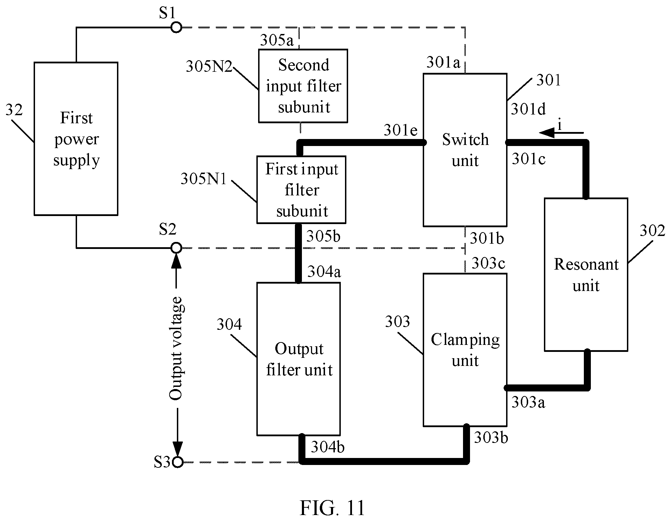

When the control circuit 33 controls the switch unit 301 to transmit the electric energy in the resonant unit 302 to the output filter unit 304, the control circuit 33 may control the switch unit 301 to transmit the electric energy in the resonant unit 302 and the first input filter subunit 305N1 to the output filter unit 304, so that the resonant unit 302 and the first input filter subunit 305N1 can charge the output filter unit 304. The control circuit 33 may control an on/off status of each switch in the switch unit 301, so that the first input filter subunit 305N1, the switch unit 301, the resonant unit 302, the clamping unit 303, and the output filter unit 304 form a sixth path, an open circuit occurs between the second end 301b of the switch unit 301 and the second input end S2 of the RSCC 31, and an open circuit occurs between the first end 301a of the switch unit 301 and the first input end S1 of the RSCC 31. The resonant unit 302 and the first input filter subunit 305N1 charge the output filter unit 304 through the sixth path. FIG. 11 shows a path and an open circuit status in the RSCC 31 in a process of charging the output filter unit 304 by the resonant unit 302 and the first input filter subunit 305N1, where a bold line indicates the sixth path, and a dashed line indicates an open-circuit part.

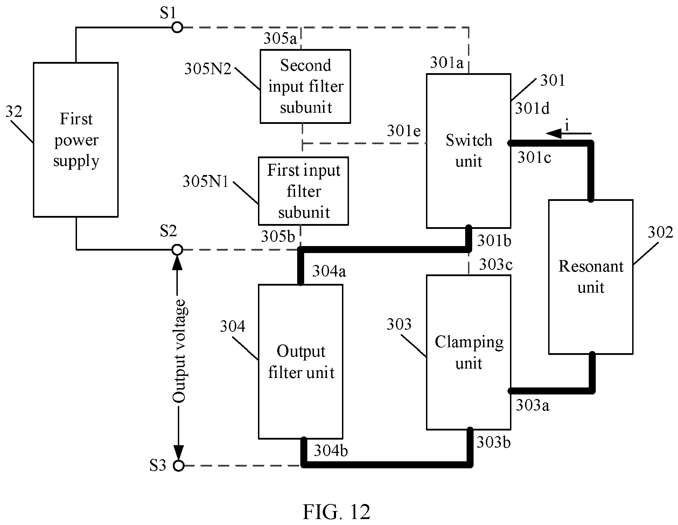

When the control circuit 33 controls the switch unit 301 to transmit the electric energy in the resonant unit 302 to the output filter unit 304, so that the resonant unit 302 can charge the output filter unit 304. The control circuit 33 may control an on/off status of each switch in the switch unit 301, so that the resonant unit 302, the switch unit 301, the output filter unit 304, and the clamping unit 303 form a seventh path, an open circuit occurs between the first end 301a of the switch unit 301 and the first input end S1 of the RSCC 31, an open circuit occurs between the second end 301b of the switch unit 301 and the second input end S2 of the RSCC 31, and an open circuit occurs between the fifth end301e of the switch unit 301 and the first input filter subunit 305N1. FIG. 12 shows a path and an open circuit status in the RSCC 31 in a process of charging the output filter unit 304 by the resonant unit 302, where a bold line indicates the seventh path, and a dashed line indicates an open-circuit part.

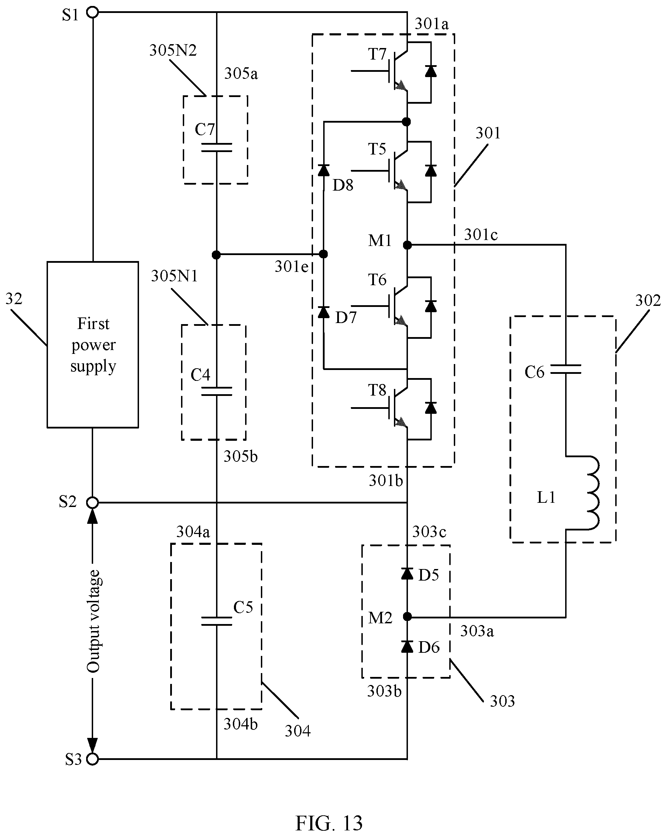

As shown in FIG. 13, in this embodiment of this application, the switch unit 301 may further include a switch T7, a switch T8, a diode D7, and a diode D8. An end of the switch T7 is separately connected to cathodes of the switch T5 and the diode D8. An end, of the switch T7, that is not connected to the switch T5 may serve as the first end 301a of the switch unit 301 and is connected to the first input end S1 of the RSCC 31. An end of the switch T8 is separately connected to anodes of the switch T6 and the diode D7. An end, of the switch T8, that is not connected to the switch T6 may serve as the second end 301b of the switch unit 301 and is connected to the second input end S2 of the RSCC 31. The first node M1 between the switch T5 and the switch T6 may be the third end 301c of the switch unit 301. An anode of the diode D8 is connected to a cathode of the diode D7. A connection point between the cathode of the diode D7 and the anode of the diode D8 in the switch unit 301 may serve as the fifth end 301e of the switch unit 301.

The control circuit 33 may control all the four switches in the switch unit 301 to be in an off state. To be specific, the control circuit 33 controls the switch T7, the switch T5, the switch T6, and the switch T8 to be in the off state, to control the switch unit 301 to stop transmitting electric energy, so that the first power supply 32 can charge the first input filter subunit 305N1 and the second input filter subunit 305N2.

The control circuit 33 may control the switch T7, the switch T6, and the switch T8 to be in an off state and the switch T5 to be in an on state, to control the switch unit 301 to transmit the electric energy in the first input filter subunit 305N1 to the resonant unit 302, so that the first input filter subunit 305N1 can charge the resonant unit 302.

Alternatively, the control circuit 33 may control the switch T7 and the switch T5 to be in an on state and control the switch T6 and the switch T8 to be in an off state, to control the switch unit 301 to transmit the electric energy in the first input filter subunit 305N1 and the second input filter subunit 305N2 to the resonant unit 302, so that the first input filter subunit 305N1 and the second input filter subunit 305N2 can jointly charge the resonant unit 302.

The control circuit 33 may control the switch T7, the switch T5, and the switch T8 to be in an off state and control the switch T6 to be in an on state, so that the switch unit 301 transmits the electric energy in the resonant unit 302 and the first input filter subunit 305N1 to the output filter unit 304, and the resonant unit 302 and the first input filter subunit 305N1 can jointly charge the output filter unit 304.

Alternatively, the control circuit 33 may control the switch T7 and the switch T5 to be in an off state and control the switch T6 and the switch T8 to be in an on state, so that the switch unit 301 transmits the electric energy in the resonant unit 302 to the output filter unit 304, and the resonant unit 302 can charge the output filter unit 304.

According to the foregoing embodiments, the control circuit 33 may control a switching-on status of each switch in the switch unit 301, to change a voltage at the first node M1 in the switch unit 301 and a voltage at the second node M2 in the clamping unit 303.

For example, the switch T7 and the switch T5 are in an on state, the switch T6 and the switch T8 are in an off state, a voltage value at the first node M1 is equal to a voltage value at the first input end S1, and a voltage value at the second node M2 is equal to a voltage value at the second input end S2. In the conversion circuit, the first power supply 32 may charge the resonant unit 302, or the first input filter subunit 305N1 and the second input filter subunit 305N2 jointly charge the resonant unit 302.

The switch T6 is in an on state, the switch T5, the switch T7, and the switch T8 are in an off state, a voltage value at the first node M1 is equal to a voltage at a node between the first input filter subunit 305N1 and the second input filter subunit 305N1, and a voltage value at the second node M2 is equal to a voltage value at the second input end S2. In the conversion circuit, the first input filter subunit 305N1 may charge the resonant unit 302.

In these two cases, the resonant unit 302 is in a charged state, a switch, in the resonant unit 302, for transmitting electric energy varies, and there are a plurality of possibilities of a source of the voltage at the first node M1. When the output filter unit includes a plurality of output filter subunits, the resonant unit 302 can be charged in more manners. Therefore, the control circuit 33 also has more control modes for controlling the switch unit 301 to transmit, to the resonant unit 302, the electric energy supplied by the first power supply 32.

For another example, the switch T7, the switch T5, and the switch T8 are in an off state, the switch T6 is controlled to be in an on state, a voltage value at the first node M1 is equal to a voltage at a node between the first input filter subunit 305N1 and the second input filter subunit 305N1, and a voltage value at the second node M2 is equal to a voltage value at the output end 304b of the output filter unit 304. In the conversion circuit, the resonant unit 302 and the first input filter subunit 305N1 jointly charge the output filter unit 304.

The switch T7 and the switch T5 are in an off state, the switch T6 and the switch T8 are controlled to be in an on state, a voltage value at the first node M1 is equal to a voltage value at the second input end S2, and a voltage value at the second node M2 is equal to a voltage value at the output end 304b of the output filter unit 304. In the conversion circuit, the resonant unit 302 charges the output filter unit 304.

Similarly, in these two cases, the output filter unit 304 is in a charged state, a switch, in the resonant unit 302, for transmitting electric energy supplied by the resonant unit 302 varies, and there are also a plurality of possibilities for transmitting the electric energy in the resonant unit 302 to another unit, for example, the first input filter subunit 305N1 or the output filter unit 304, through the first node M1. When the output filter unit includes a plurality of output filter subunits, the output filter unit 304 can be charged in more manners. Therefore, the control circuit 33 also has more control modes for controlling the switch unit 301 to transmit the electric energy in the resonant unit 302 to the output filter unit 304.

It should be understood that, in an actual application scenario, when the output filter unit 304 in the RSCC 31 is charged, to prevent a current that may be generated in the circuit during charging from causing impact to the switch unit 301, the control circuit 33 may control, in a fine-grained manner by using the foregoing various control operations, a process of charging the output filter unit 304.

For example, the control circuit 33 first controls the switch unit 301 to transmit the electric energy in the first input filter subunit 305N1 to the resonant unit 302, and the first input filter subunit 305N1 charges the resonant unit 302. The electric energy in the first input filter subunit 305N1 is less than the electric energy supplied by the first power supply 32, and a current generated in a process of charging the resonant unit 302 is small.

Compared with a current generated in a process of directly charging the resonant unit 302 by the first power supply 32 when there is no electric energy in the resonant unit 302, after the resonant unit 302 is charged by the first input filter subunit 305N1, specific electric energy is stored in the resonant unit 302, and a current generated in a process of charging the resonant unit 302 by the first power supply 32 is smaller, thereby avoiding impact on the switch unit 301.

In one control period, the control circuit 33 may perform any one of the foregoing control operations for charging the resonant unit 302, and may also perform any one of the foregoing control operations for charging the output filter unit 304. A time period in which the control operation for charging the resonant unit 302 is performed does not overlap a time period in which the control operation for charging the output filter unit 304 is performed.

In an example, the control circuit 33 may control, in a first half period of a first control period, the switch unit 301 to transmit the electric energy in the first input filter subunit 305N1 and the second input filter subunit 305N2 to the resonant unit 302; and the control circuit 33 may control, in a last half period of the first control period, the resonant unit 302 to control the switch unit 301 to transmit the electric energy in the resonant unit 302 to the output filter unit 304; or the control circuit 33 may control, in a last half period of the first control period, the switch unit 301 to transmit the electric energy in the first input filter subunit 305N1 and the electric energy in the resonant unit 302 to the output filter unit 304.

In another example, the control circuit 33 may control, in a first half period of a second control period, the switch unit 301 to transmit the electric energy in the first input filter subunit 305N1 to the resonant unit 302; and the control circuit 33 may control, in a last half period of the second control period, the switch unit 301 to transmit the electric energy in the resonant unit 302 to the output filter unit 304; or the control circuit 33 may control, in a last half period of the second control period, the switch unit 301 to transmit both the electric energy in the first input filter subunit 305 and the electric energy in the resonant unit 302 to the output filter unit 304.

Alternatively, in one control period, the control circuit 33 may perform, a plurality of times, any one of the foregoing control operations for charging the resonant unit 302, and perform, a plurality of times, any one of the foregoing control operations for charging the output filter unit 304. A time period in which the control operation for charging the resonant unit 302 is performed does not overlap a time period in which the control operation for charging the output filter unit 304 is performed. Between two adjacent control operations performed by the control circuit 33 for charging the resonant unit 302, the control circuit 33 performs one control operation for charging the output filter unit 304.

In an example, the control circuit 33 may control, in a first time period of a first half period of a third control period, the switch unit 301 to transmit the electric energy in the first input filter subunit 305N1 and the second input filter subunit 305N2 to the resonant unit 302, or control the switch unit 301 to transmit the electric energy in the first input filter subunit 305N1 to the resonant unit 302. The control circuit 33 may control, in a second time period of the first half period of the third control period, the resonant unit 302 to control the switch unit 301 to transmit the electric energy in the resonant unit 302 to the output filter unit 304, or control the switch unit 301 to transmit the electric energy in the first input filter subunit 305 and the electric energy in the resonant unit 302 to the output filter unit 304.

The control circuit 33 may control, in a third time period of a last half period of the third control period, the switch unit 301 to transmit the electric energy in the first input filter subunit 305N1 and the second input filter subunit 305N2 to the resonant unit 302, or control the switch unit 301 to transmit the electric energy in the first input filter subunit 305N1 to the resonant unit 302. The control circuit 33 may control, in a fourth time period of the last half period of the third control period, the resonant unit 302 to control the switch unit 301 to transmit the electric energy in the resonant unit 302 to the output filter unit 304, or control the switch unit 301 to transmit the electric energy in the first input filter subunit 305 and the electric energy in the resonant unit 302 to the output filter unit 304.

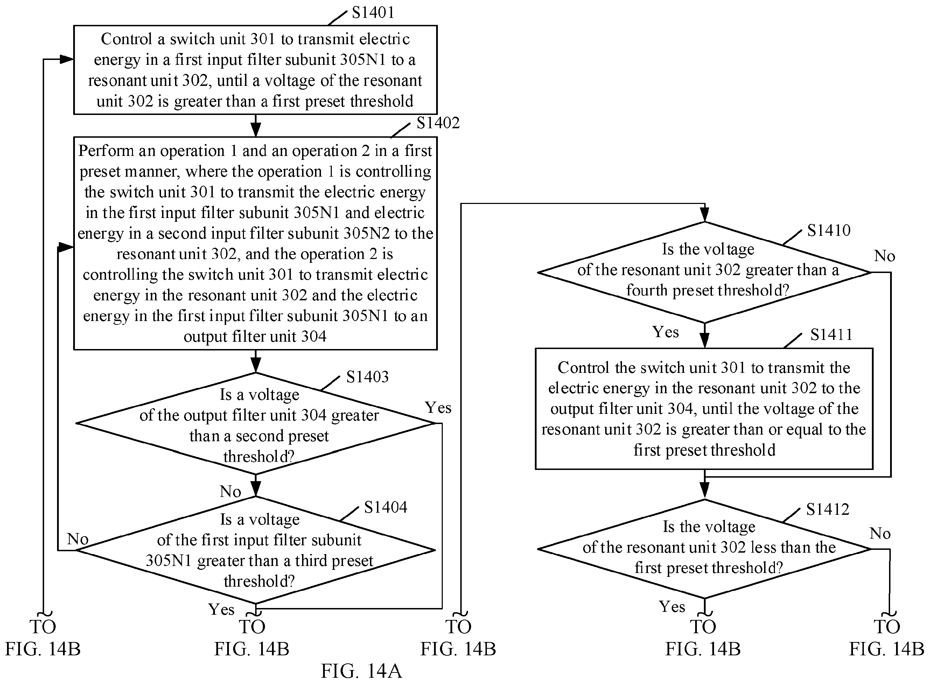

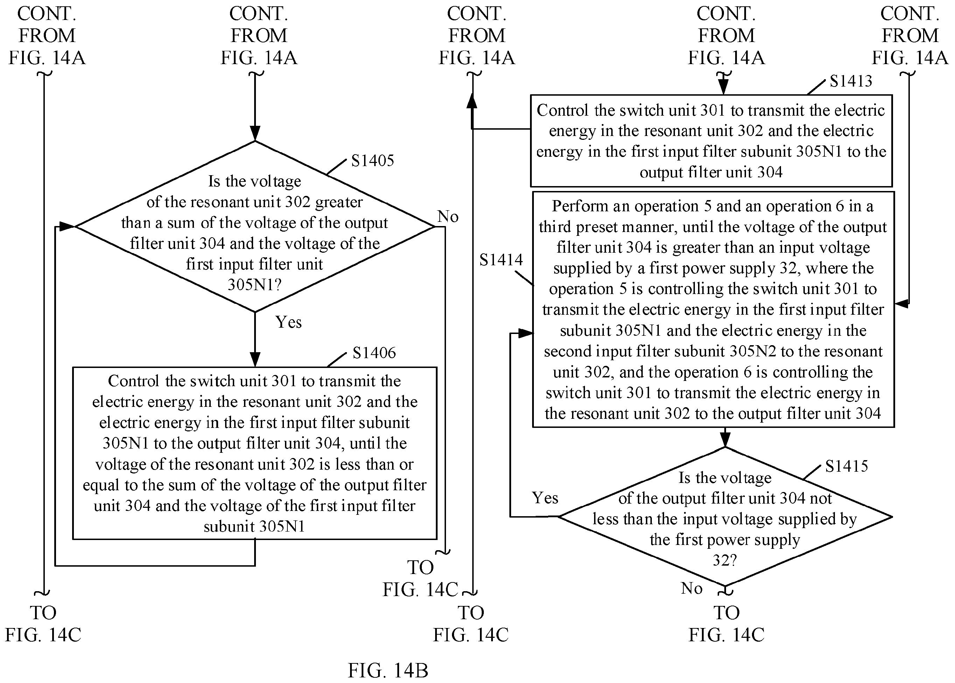

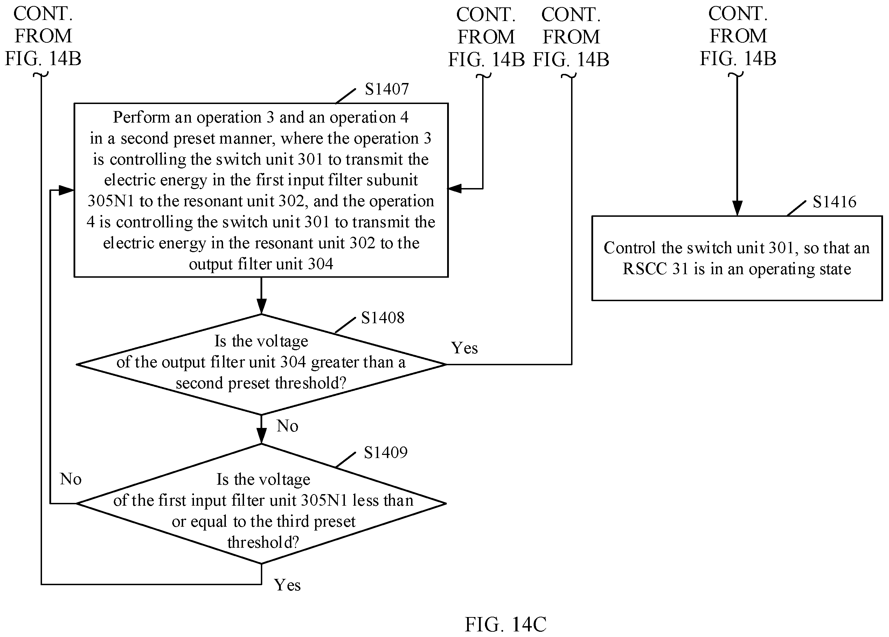

It should be understood that the control circuit 33 may further control, in a more fine-grained manner, the switch unit 301 to transmit, to the output filter unit 304, the electric energy supplied by the first power supply 32. The following embodiment of this application provides a control method. The method may be applied to the conversion circuit corresponding to FIG. 7. The method may include a plurality of steps, and the control circuit may perform at least one step in one control period, or the control circuit may perform a step a plurality of times in one control period. As shown in FIG. 14A, FIG. 14B, and FIG. 14C, the method includes the following steps.

Step S1401: The control circuit 33 controls the switch unit 301 to transmit electric energy in the first input filter subunit 305N1 to the resonant unit 302, until a voltage of the resonant unit 302 is greater than a first preset threshold.

Before controlling the RSCC 31 to operate, the control circuit 33 may perform a preconfigured control operation to control the switch unit 301 to transmit, to the output filter unit 304, electric energy supplied by the first power supply 32. The control circuit 33 may first perform the control operation in step S1401, so that the voltage of the resonant unit 302 is greater than the first preset threshold, and a spike current generated in a subsequent charging process can be reduced. The first preset threshold may be a minimum value within a first voltage range.

Step S1402: The control circuit 33 performs an operation 1 and an operation 2 in a first preset manner, where the operation 1 is controlling the switch unit 301 to transmit the electric energy in the first input filter subunit 305N1 and electric energy in the second input filter subunit 305N2 to the resonant unit 302, and the operation 2 is controlling the switch unit 301 to transmit electric energy in the resonant unit 302 and the electric energy in the first input filter subunit 305N1 to the output filter unit 304.

The first preset manner may be an alternation manner of "the operation 1, the operation 2, the operation 1, the operation 2, ..". The control circuit 33 may control duration of performing the operation 1, for example, control the duration of the operation 1 by controlling duration of a high-level pulse or controlling duration of a low-level pulse, to be specific, control duration of charging the resonant unit 302 by the first input filter subunit 305N1 and the second input filter subunit 305N2. Similarly, the control circuit 33 may also control duration of another charging operation. The first preset manner may be alternatively an alternation manner of "the operation 2, the operation 1, the operation 2, the operation 1, ..".

The control circuit 33 uses the first input filter subunit 305N1 and the resonant unit 302 as intermediate media for transmitting energy, and may perform a control operation in the first preset manner to transfer the energy in the second input filter subunit 305N2 to the output filter unit 304. This may also be understood as that the second input filter subunit 305N2 charges the output filter unit 304. In step S1402, a voltage of the second input filter subunit 305N2 decreases, and a voltage of the first input filter subunit 305N1 increases.

Step S1403: The control circuit 33 determines whether a voltage of the output filter unit 304 is greater than a second preset threshold; and if no, performs step S1404 next; or if yes, performs step S1405 next.

The control circuit 33 may monitor the voltage of the output filter unit 304 in a process of alternately performing the operation 1 and the operation 2. If the voltage of the output filter unit 304 is greater than the second preset threshold, it may be considered that preliminary charging of the output filter unit 304 by the second input filter subunit 305N2 is completed.

In this embodiment of this application, the second preset threshold may be a minimum value within a second voltage range. A value within the second voltage range may be any value close to a voltage value that is 0.3 times an input voltage Vin of the first power supply 32. For example, the minimum value within the third voltage range may be 0.3Vin, and the second voltage range may be [0.3Vin, Vin]. Alternatively, the second voltage range may include inconsecutive values, for example, {0.3Vin, 0.31Vin, 0.315Vin, 0.35Vin}. In this embodiment of this application, a value range close to the voltage value that is 0.3 times the input voltage Vin of the first power supply 32 may be configured based on a parameter of an element in the RSCC 31.

Step S1404: The control circuit 33 determines whether the voltage of the first input filter subunit 305N1 is greater than a third preset threshold; and if yes, performs step S1402 next; or if no, performs step S1405 next.

The control circuit 33 may also monitor the voltage of the first input filter subunit 305N1 in the process of alternately performing the operation 1 and the operation 2. The third preset threshold may be the minimum value within the second voltage range. The minimum value within the second voltage range may be determined based on the input voltage Vin supplied by the first power supply 32 and a preset threshold ref. For example, if the preset threshold ref is 30 V, the minimum value within the second voltage range may be (0.5Vin + 30) V For example, the second voltage range may be [0.5Vin + ref, Vin]. Alternatively, the second voltage range may include inconsecutive values, for example, {0.48Vin+ref, 0.485Vin+ref, 0.5Vin+ref}. In this embodiment of this application, the preset threshold ref may be configured based on a parameter of an element in the RSCC 31 or a scenario to which the conversion circuit is applied. Alternatively, the preset threshold ref may be determined based on a status of a test on impact of precharge on operating performance of the conversion circuit. For example, Vin is 1500 V, ref is 30 V, and the third preset threshold may be 780 V.

In the process of step S1402 to step S1403 in this embodiment of this application, alternatively, the control circuit 33 may alternately perform the operation 1 and the operation 2, until the voltage of the first input filter subunit 305N1 falls within the second voltage range; or the control circuit 33 may alternately perform the operation 1 and the operation 2, until the voltage of the first input filter subunit 305N1 is greater than the second preset threshold. A sequence of performing step S1403 and step S1404 is not specifically limited in this embodiment of this application.

Step S1405: The control circuit 33 determines whether the voltage of the resonant unit 302 is greater than a sum of the voltage of the output filter unit 304 and the voltage of the first input filter subunit 305N1; and if yes, performs step S1406 next; or if no, performs step S1407 next.

The control circuit 33 may also monitor the voltage of the resonant unit 302. If determining that the voltage of the resonant unit 302 is greater than the sum of the voltage of the output filter unit 304 and the voltage of the first input filter subunit 305N1, the control circuit 33 may control the switch unit 301 to transmit the electric energy in the resonant unit 302 and the electric energy in the first input filter subunit 305N1 to the output filter unit 304. On the contrary, if determining that the voltage of the resonant unit 302 is less than or equal to the sum of the voltage of the output filter unit 304 and the voltage of the first input filter subunit 305N1, the control circuit 33 may control the switch unit 301 to transmit the electric energy in the first input filter subunit 305N1 to the resonant unit 302.

Step S1406: Control the switch unit 301 to transmit the electric energy in the resonant unit 302 and the electric energy in the first input filter subunit 305N1 to the output filter unit 304, until the voltage of the resonant unit 302 is less than or equal to the sum of the voltage of the output filter unit 304 and the voltage of the first input filter subunit 305N1.

The control circuit 33 performs the operation of step S1406, to use the first input filter subunit 305N1 as an energy transmission medium, so that the energy in the resonant unit 302 can be transmitted to the output filter unit 304, the voltage of the resonant unit 302 decreases, and the voltage of the output filter unit 304 increases.

Step S1407: The control circuit 33 performs an operation 3 and an operation 4 in a second preset manner, where the operation 3 is controlling the switch unit 301 to transmit the electric energy in the first input filter subunit 305N1 to the resonant unit 302, and the operation 4 is controlling the switch unit 301 to transmit the electric energy in the resonant unit 302 to the output filter unit 304.

In a process of performing step S1406 by the control circuit 33, the voltage of the resonant unit 302 decreases, and when a voltage value of the resonant unit 302 decreases to be less than or equal to the sum of the voltage of the output filter unit 304 and the voltage of the first input filter subunit 305N1, the resonant unit 302 cannot continue to transmit energy to the output filter unit 304, and cannot charge the output filter unit 304. The control circuit 33 may perform the operation 3 to increase the voltage of the resonant unit 302, and the control circuit 33 may perform the operation 4 to enable the resonant unit 302 to charge the output filter unit 304.

In this embodiment of this application, the second preset manner may be an alternation manner of "the operation 3, the operation 4, the operation 3, the operation 4, ...". The control circuit 33 may control duration of performing the operation 3, for example, control the duration of the operation 3 by controlling duration of a high-level pulse or controlling duration of a low-level pulse. Similarly, the control circuit 33 may also control duration of the operation 4. The second preset manner may be alternatively an alternation manner of "the operation 4, the operation 3, the operation 4, the operation 3, ...".

The control circuit 33 uses the resonant unit 302 as an intermediate medium for transmitting energy, and may perform a control operation in the second preset manner to transfer the energy in the first input filter subunit 305N1 to the output filter unit 304, so that the first input filter subunit 305N1 can charge the output filter unit 304. In a process of performing step S1407 by the control circuit 33, the voltage of the first input filter subunit 305N1 decreases, and the voltage of the output filter unit 304 increases.

Step S1408: The control circuit 33 determines whether the voltage of the output filter unit 304 is greater than the second preset threshold; and if no, performs step S1409 next; or if yes, performs step S1410 next.

In a process of alternately performing the operation 3 and the operation 4 by the control circuit 33, the voltage of the output filter unit 304, the voltage of the second input filter subunit 305N2, and the voltage of the first input filter subunit 305N1 all change. If determining that the voltage of the output filter unit 304 is greater than the second preset threshold, the control circuit 33 may stop performing step S1407, and perform step S1410. If determining that the voltage of the output filter unit 304 is less than or equal to the second preset threshold, the control circuit 33 may perform a determining process in step S1409.

Step S1409: The control circuit 33 determines whether the voltage of the first input filter subunit 305N1 is less than or equal to the third preset threshold; and if yes, performs step S1401 next; or if no, performs step S1407 next.

In this embodiment of this application, when performing step S1408 and step S1409, the control circuit 33 may also perform step S1407. In other words, the control circuit 33 may also perform step S1408 and step S1409 in a process of performing step S1407.

Step S1410: The control circuit 33 determines whether the voltage of the resonant unit 302 is greater than a fourth preset threshold; and if yes, performs step S1411 next; or if no, performs step S1412 next.

In this embodiment of this application, the fourth preset threshold may be a value greater than half of the input voltage Vin of the first power supply 32, for example, 0.55Vin.

Step S1411: The control circuit 33 controls the switch unit 301 to transmit the electric energy in the resonant unit 302 to the output filter unit 304, until the voltage of the resonant unit 302 is greater than or equal to the first preset threshold.

Step S1412: The control circuit 33 determines whether the voltage of the resonant unit 302 is less than the first preset threshold; and if yes, performs step S1413 next; or if no, performs step S1414 next.

Step S1413: The control circuit 33 controls the switch unit 301 to transmit the electric energy in the resonant unit 302 and the electric energy in the first input filter subunit 305N1 to the output filter unit 304.

Step S1414: The control circuit 33 performs an operation 5 and an operation 6 in a third preset manner, until the voltage of the output filter unit 304 is greater than the input voltage supplied by the first power supply 32, where the operation 5 is controlling the switch unit 301 to transmit the electric energy in the first input filter subunit 305N1 and the electric energy in the second input filter subunit 305N2 to the resonant unit 302, and the operation 6 is controlling the switch unit 301 to transmit the electric energy in the resonant unit 302 to the output filter unit 304.

Step S1415: The control circuit 33 determines whether the voltage of the output filter unit 304 is greater than or equal to the input voltage supplied by the first power supply 32; and if yes, performs step S1414 next; or if no, performs step S1416 next.

Step S1416: The control circuit 33 controls the switch unit 301, so that the RSCC 31 is in an operating state.

If the voltage of the output filter unit 304 is greater than or equal to the input voltage supplied by the first power supply 32, it may be considered that a process of precharging the output filter unit 304 is completed. The control circuit 33 may control the switch unit 301, to control the RSCC 31 to output a target voltage, so that the conversion circuit is in an operating state.

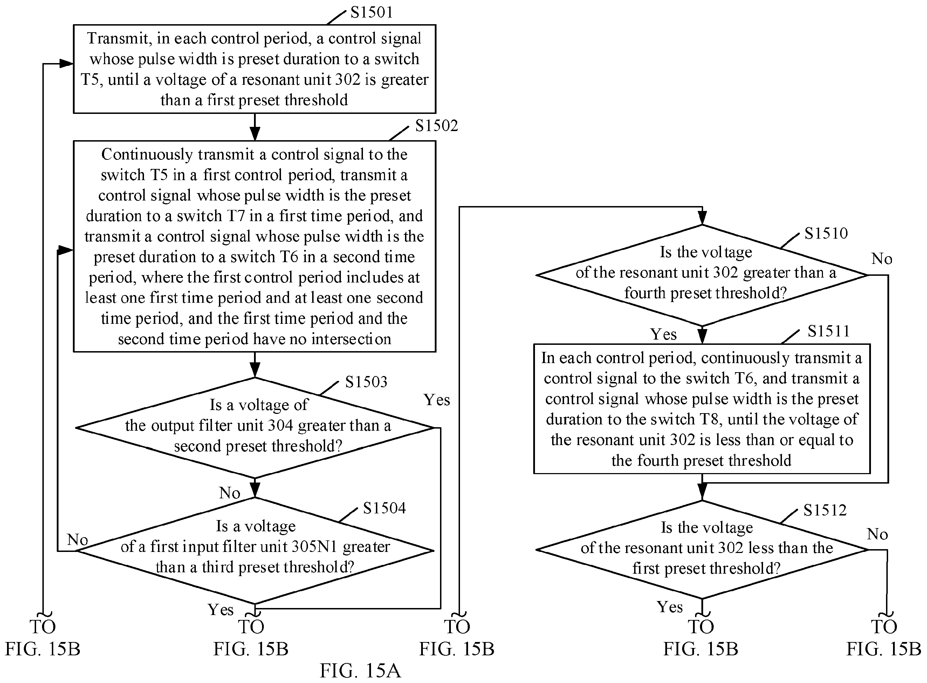

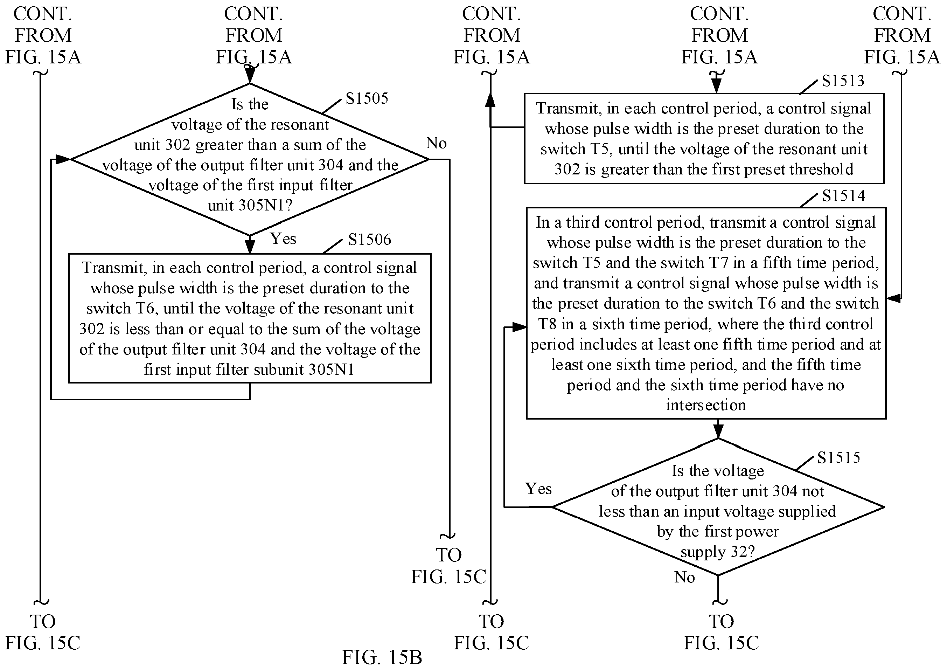

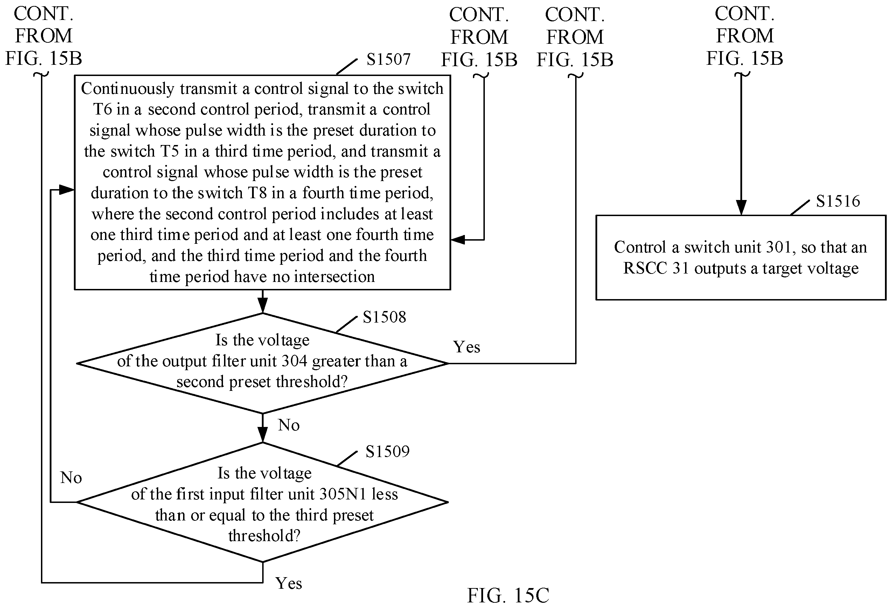

In this embodiment of this application, the sequence of the steps is merely an example, and is not construed as a specific limitation to a sequence of performing the steps. In addition, an embodiment of this application further provides another control method. The method may be applied to the conversion circuit corresponding to FIG. 13. The method may include a plurality of steps, and the control circuit 33 may perform at least one step in a control period. The method may include a plurality of steps, and the control circuit 33 may perform at least one step in one control period, or the control circuit 33 may perform a step a plurality of times in one control period. As shown in FIG. 15A, FIG. 15B, and FIG. 15C, the method includes the following steps.

Step S1501: The control circuit 33 transmits, in each control period, a control signal whose pulse width is preset duration to the switch T5, until a voltage of the resonant unit 302 is greater than a first preset threshold.

The control circuit 33 may transmit a pulse signal to a switch, to control the switch to be switched on. Alternatively, the control circuit 33 may transmit no pulse signal to a switch, to control the switch to be switched on. In this embodiment of this application, an example in which the control circuit 33 transmits a pulse signal to a switch to control the switch to be switched on is used to describe this embodiment of this application, but is not construed as a specific limitation to this embodiment of this application.

In an operation process of performing step S1501 by the control circuit 33, the switch T5 enters an on state after receiving the control signal, and the switch T5 may remain in the on state until no control signal is received. The switch T7, the switch T6, and the switch T8 are controlled to be in an off state in each control period.

Usually, the preset duration is less than duration of one control period. The duration of one control period may be 55 microseconds, and the preset duration may be 1.8%×55 microseconds, or the preset duration may be 2%×55 microseconds. The preset duration may be in a first half period or a last half period of a control period.

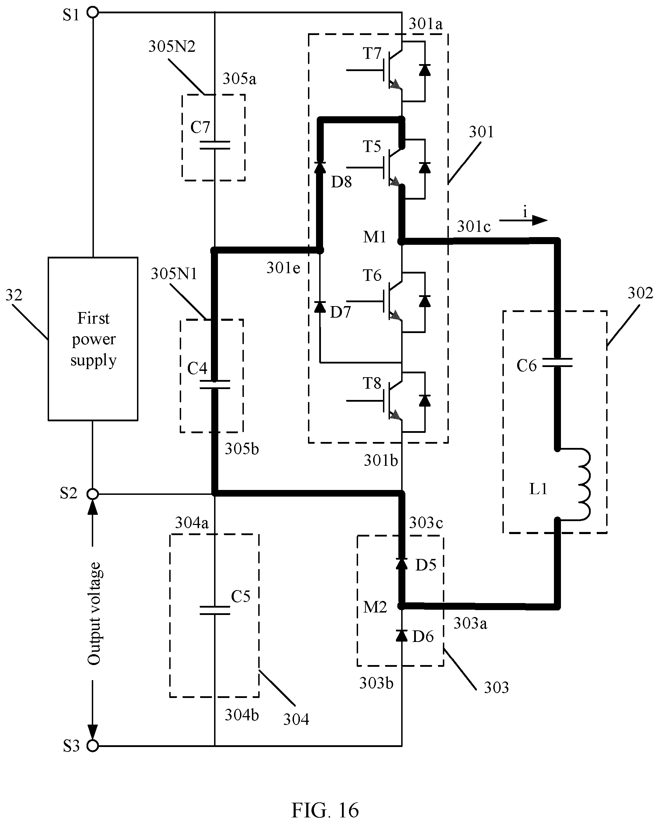

The switch T5 is in the on state, and the other switches are in the off state. As shown in FIG. 16, the switch unit 301 transmits electric energy in the first input filter subunit 305N1 to the resonant unit 302. The control circuit 33 may transmit, a plurality of times, a control signal whose pulse width is the preset duration to the switch T5, so that the voltage of the resonant unit 302 gradually increases, until the voltage of the resonant unit 302 is greater than the first preset threshold, and then the control circuit 33 may perform step S1502. The first preset threshold may be a minimum value within a first voltage range.

Before step S1501, the control circuit 33 may control all the switches in the switch unit 301 to be in an off state, so that the first power supply 32 charges the first input filter subunit 305N1.

Step S1502: The control circuit 33 continuously transmits a control signal to the switch T5 in a first control period, transmits a control signal whose pulse width is the preset duration to the switch T7 in a first time period, and transmits a control signal whose pulse width is the preset duration to the switch T6 in a second time period, where the first control period includes at least one first time period and at least one second time period, and the first time period and the second time period have no intersection.

The control circuit 33 may control the switch T5 to be in an on state throughout the first control period, and control the switch T8 to be in an off state throughout the first control period. The control circuit 33 may control the switch T7 to be in an on state in the first time period in the first control period, and control the switch T6 to be in an on state in the second time period in the first control period, where the first time period and the second time period have no intersection.

Alternatively, the first control period may include a plurality of first time periods and a plurality of second time periods. The 1^{st} first time period may be earlier than the 1^{st} second time period, or may be later than the 1^{st} second time period. There is one second time period between two adjacent first time periods. The control circuit 33 may control the switch T7 and the switch T6 to be alternately in an on state in the first control period. When the switch T7 is in an on state, the switch T6 may be in an off state. When the switch T7 is in an off state, the switch T6 may be in an on state.

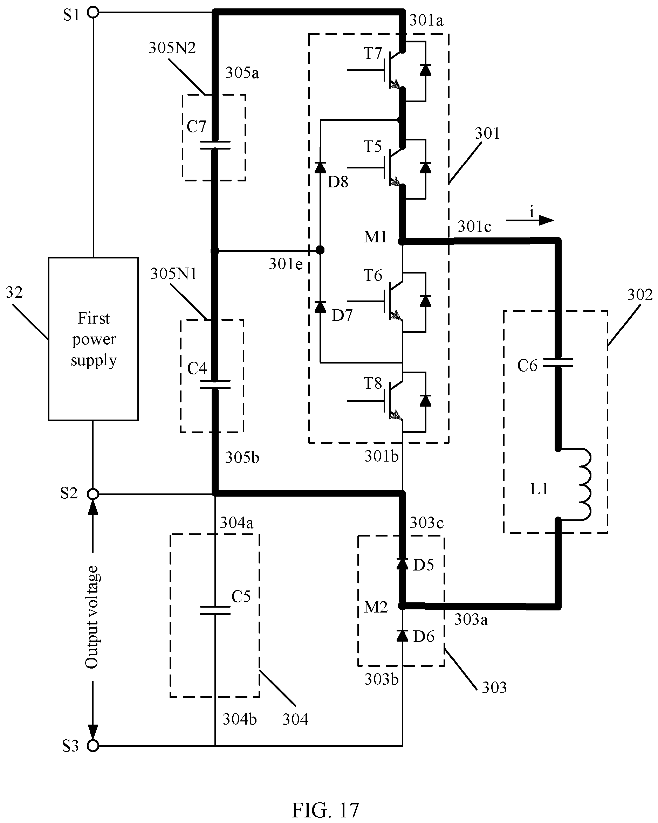

In the conversion circuit, as shown in FIG. 17, the control circuit 33 controls the switch T5 to be in an on state, the switch T8 to be in an off state, the switch T7 to be in an on state, and the switch T6 to be in an off state. The switch T5 and the switch T7 may transmit the electric energy in the first input filter subunit 305N1 and electric energy in the second input filter subunit 305N2 to the resonant unit 302.

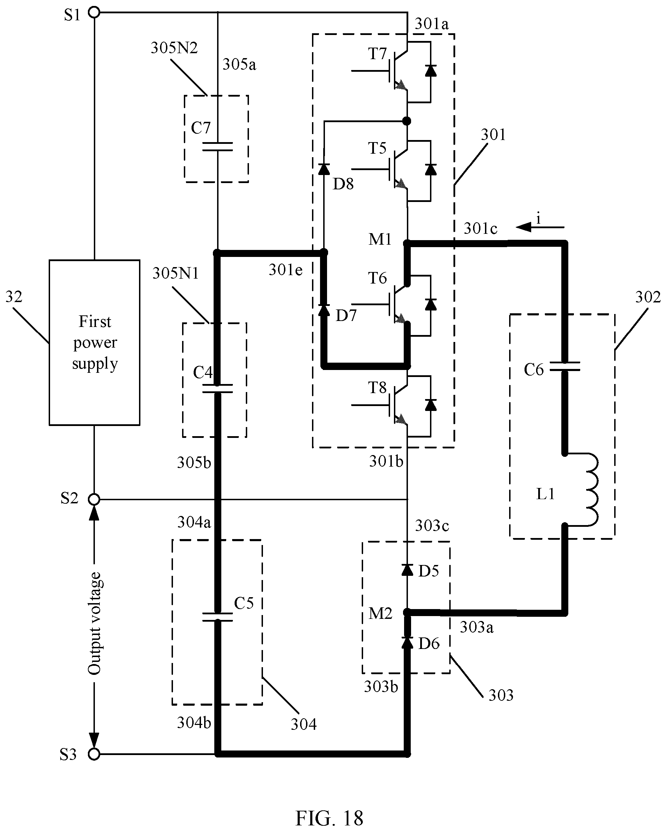

As shown in FIG. 18, the control circuit 33 controls the switch T5 to be in an on state, the switch T8 to be in an off state, the switch T7 to be in an off state, and the switch T6 to be in an on state. The switch T5 and the switch T6 may transmit the electric energy in the first input filter subunit 305N1 and electric energy in the resonant unit 302 to the output filter unit 304.

Step S1503: Determine whether a voltage of the output filter unit 304 is greater than a second preset threshold; and if no, perform step S1504 next; or if yes, perform step S1505 next.

In a process of performing step S1502, the control circuit 33 may collect the voltage of the output filter unit 304 by using a collection apparatus, and determine a magnitude relationship between the voltage of the output filter unit 304 and the second preset threshold. In other words, step S1503 and step S1502 may be performed in parallel.

Step S1504: The control circuit 33 determines whether a voltage of the first input filter subunit 305N1 is greater than a third preset threshold; and if yes, performs step S1502 next; or if no, performs step S1505 next.

In a process of performing step S1502, the control circuit 33 may collect the voltage of the first input filter subunit 305N1 by using the collection apparatus, and determine a magnitude relationship between the voltage of the first input filter subunit 305N1 and the third preset threshold. In other words, step S1504, step S1502, and step S1503 may be performed in parallel. Alternatively, the control circuit 33 may perform step S1504 in parallel after performing step S1502.

If the voltage of the first input filter subunit 305N1 is greater than the third preset threshold, the control circuit 33 performs the operation in step S1502 again. The control circuit 33 performs the control operation in step S1502 in a next control period, in other words, uses the next control period as the first control period.

In this embodiment of this application, the control circuit 33 performs step S1503 and step S1504, to determine thatthe voltage of the output filter unit 304 or the voltage of the first input filter subunit 305N1 meets a condition, so as to determine an occasion for ending step S1502. This embodiment of this application provides two conditions for determining whether to end step S1502. In an actual application scenario, alternatively, the control circuit 33 may determine to end step S1502 only by determining that the voltage of the output filter unit 304 meets a condition, or may determine to end step S1502 only by determining that the voltage of the first input filter subunit 305N1 meets a condition. In other words, the control circuit 33 may perform step S1503 after performing step S1502, or perform step S1504 after performing step S1502.

Step S1505: The control circuit 33 determines whether the voltage of the resonant unit 302 is greater than a sum of the voltage of the output filter unit 304 and the voltage of the first input filter subunit 305N1; and if yes, performs step S1506 next; or if no, performs step S1507 next.

Step S1506: The control circuit 33 transmits, in each control period, a control signal whose pulse width is the preset duration to the switch T6, until the voltage of the resonant unit 302 is less than or equal to the sum of the voltage of the output filter unit 304 and the voltage of the first input filter subunit 305N1.

The control circuit 33 may control the switch T7, the switch T5, and the switch T8 to be in an off state in each control period, and control the switch T6 to be in an on state in a preset time period in each control period. As shown in FIG. 18, the control circuit 33 continuously transmits a control signal to the switch T6 in a preset time period in each control period, so that the switch T6 can remain in an on state in the preset time period, the switch T6 can transmit the energy in the resonant unit 302 to the output filter unit 304, and the voltage of the output filter unit 304 can slowly increase.

In this embodiment of this application, in step S1505 and step S1506, if it is determined that the resonant unit 302 has a large quantity of electricity, the resonant unit 302 may charge the output filter unit 304; or if the resonant unit 302 has a small quantity of electricity, the control circuit 33 may directly perform step S1507, so that the first input filter subunit 305N1 charges the resonant unit 302.

In a process of performing step S1506 by the control circuit 33, when the voltage of the resonant unit 302 decreases from being greater than the sum of the voltage of the first input filter subunit 305N1 and the voltage of the output filter unit 304 to being equal to the sum of the voltage of the first input filter subunit 305N1 and the voltage of the output filter unit 304, the circuit is in a steady state, and the resonant unit 302 stops discharging.

Step S1507: The control circuit 33 continuously transmits a control signal to the switch T6 in a second control period, transmits a control signal whose pulse width is the preset duration to the switch T5 in a third time period, and transmits a control signal whose pulse width is the preset duration to the switch T8 in a fourth time period, where the second control period includes at least one third time period and at least one fourth time period, and the third time period and the fourth time period have no intersection.

When performing step S1507, the control circuit 33 may control the switch T6 to be in an on state throughout the second control period, and the switch T7 to be in an off state throughout the second control period. The control circuit 33 may control the switch T5 to be in an on state in the third time period in the second control period, and control the switch T8 to be in an on state in the fourth time period in the second control period, where the third time period and the fourth time period have no intersection.

Alternatively, the second control period may include a plurality of third time periods and a plurality of fourth time periods. The 1^{st} third time period may be earlier than the 1^{st} fourth time period, or may be later than the 1^{st} fourth time period. There is one fourth time period between two adjacent third time periods. The control circuit 33 may control the switch T5 and the switch T8 to be alternately in an on state in the second control period. When the switch T5 is in an on state, the switch T8 may be in an off state. When the switch T8 is in an off state, the switch T5 may be in an on state.

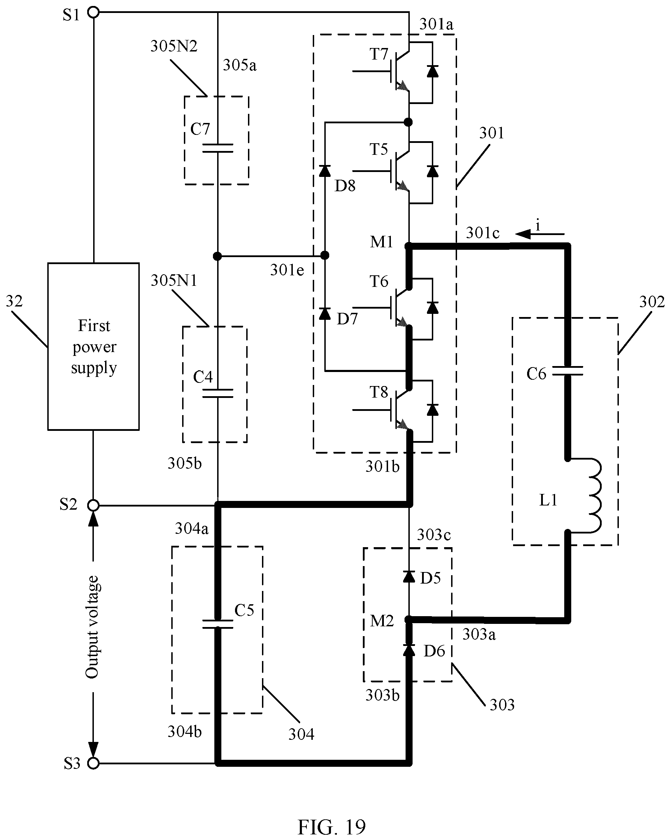

In the conversion circuit, as shown in FIG. 19, the control circuit 33 controls the switch T6 to be in an on state, the switch T7 to be in an off state, the switch T8 to be in an on state, and the switch T5 to be in an off state. The switch T6 and the switch T8 may transmit the electric energy in the resonant unit 302 to the output filter unit 304.

As shown in FIG. 16, the control circuit 33 controls the switch T6 to be in an on state, the switch T7 to be in an off state, the switch T8 to be in an off state, and the switch T5 to be in an on state. The switch T5 may transmit the electric energy in the first input filter subunit 305N1 to the output filter unit 304.

Step S1508: The control circuit 33 determines whether the voltage of the output filter unit 304 is greater than the second preset threshold; and if no, performs step S1509 next; or if yes, performs step S1510 next.

In a process of performing step S1507 by the control circuit 33, the voltage of the output filter unit 304, the voltage 305N2 of the second input filter subunit 305N2, and the voltage of the first input filter subunit 305N1 all change. If determining that the voltage of the output filter unit 304 is greater than the second preset threshold, the control circuit 33 may stop performing step S1507, and perform step S1510. If determining that the voltage of the output filter unit 304 is less than or equal to the second preset threshold, the control circuit 33 may perform a determining process in step S1509.

Step S1509: The control circuit 33 determines whether the voltage of the first input filter subunit 305N1 is less than or equal to the third preset threshold; and if yes, performs step S1501 next; or if no, performs step S1507 next.

In this embodiment of this application, when performing step S1508 and step S1509, the control circuit 33 may also perform step S1507. In other words, the control circuit 33 may also perform step S1508 and step S1509 in a process of performing step S1507. The control circuit 33 performs step S1503 and step S1504, to determine whether the voltage of the output filter unit 304 or the voltage of the first input filter subunit 305N1 meets a condition, so as to determine an occasion for ending step S1507. This embodiment of this application provides two conditions for determining whether to end step S1507. In an actual application scenario, alternatively, the control circuit 33 may determine to end step S1507 only by determining that the voltage of the output filter unit 304 meets a condition, or may determine to end step S1507 only by determining that the voltage of the first input filter subunit 305N1 meets a condition. In other words, the control circuit 33 may perform step S1508 after performing step S1507, or perform step S1509 after performing step S1507.

Step S1510: The control circuit 33 determines whether the voltage of the resonant unit 302 is greater than a fourth preset threshold; and if yes, performs step S1511 next; or if no, performs step S1512 next.

In this embodiment of this application, the fourth preset threshold may be a value greater than half of an input voltage Vin of the first power supply 32, for example, 0.55Vin.

Step S1511: In each control period, the control circuit 33 continuously transmits a control signal to the switch T6, and transmits a control signal whose pulse width is the preset duration to the switch T8, until the voltage of the resonant unit 302 is less than or equal to the fourth preset threshold.

In the conversion circuit, as shown in FIG. 19, the control circuit 33 controls the switch T6 to be in an on state, the switch T7 to be in an off state, the switch T8 to be in an on state, and the switch T5 to be in an off state. The switch T6 and the switch T8 may transmit the electric energy in the resonant unit 302 to the output filter unit 304. The control circuit 33 performs step S1511 to control the switch T6 and the switch T8 to transmit the electric energy in the resonant unit 302 to the output filter unit 304, thereby reducing voltages at two ends of the resonant unit 302. The control circuit 33 may perform step S1511 after determining that the voltage of the resonant unit 302 is less than or equal to the fourth preset threshold.

Step S1512: The control circuit 33 determines whether the voltage of the resonant unit 302 is less than the first preset threshold; and if yes, performs step S1513 next; or if no, performs step S1514 next.

Step S1513: The control circuit 33 transmits, in each control period, a control signal whose pulse width is the preset duration to the switch T5, until the voltage of the resonant unit 302 is greater than the first preset threshold.

In a process of performing step S1513 by the control circuit 33, the switch T5 transmits the electric energy in the first input filter subunit 305N1 to the resonant unit 302, as shown in FIG. 16. In the process of performing step S1513, the control circuit 33 may also monitor whether the voltage of the resonant unit 302 is between the first preset threshold and the fourth preset threshold. If the control circuit 33 determines, in the process of performing step S1513, that the voltage of the resonant unit 302 is between the first preset threshold and the fourth preset threshold, the control circuit 33 may also directly perform step S1514.

In this embodiment of this application, a process of performing step S1510 to step S1512 by the control circuit 33 may be understood as that the control circuit 33 controls a switch in the switch unit 301, to adjust a voltage value of the resonant unit 302 to be greater than the first preset threshold.

Step S1514: In a third control period, the control circuit 33 transmits a control signal whose pulse width is the preset duration to the switch T5 and the switch T7 in a fifth time period, and transmits a control signal whose pulse width is the preset duration to the switch T6 and the switch T8 in a sixth time period, where the third control period includes at least one fifth time period and at least one sixth time period, and the fifth time period and the sixth time period have no intersection.

The control circuit 33 controls the switch T5 and the switch T7 to be in an on state in the fifth time period in the third control period, as shown in FIG. 17. The switch T5 and the switch T7 may transmit the electric energy in the first input filter subunit 305N1 and the electric energy in the second input filter subunit 305N2 to the resonant unit 302.

The control circuit 33 controls the switch T6 and the switch T8 to be in an on state in the sixth time period in the third control period, as shown in FIG. 19. The switch T6 and the switch T8 may transmit the electric energy in the resonant unit 302 to the output filter unit 304.

Step S1515: The control circuit 33 determines whether the voltage of the output filter unit 304 is not less than the input voltage supplied by the first power supply 32; and if yes, performs step S1514 next; or if no, performs step S1516 next.

Step S1516: The control circuit 33 controls the switch unit 301, so that the RSCC 31 outputs a target voltage.

The control circuit 33 may control a switch in the switch unit 301 in a preset control mode, so that the RSCC 31 can output the target voltage, and the conversion circuit is controlled to be in an operating state.

In this embodiment of this application, the sequence of the steps is merely an example, and is not construed as a specific limitation to a sequence of performing the steps.

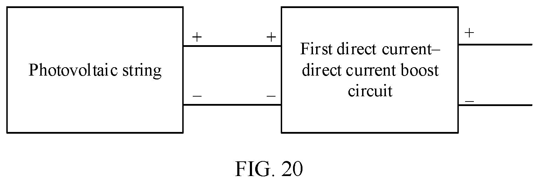

The conversion circuit and the control method provided in this application may be applied to a scenario in which an electronic power converter is used, for example, a photovoltaic power generating system, an electric vehicle, or a renewable energy system is used. As shown in FIG. 20, the first power supply in the conversion circuit provided in this embodiment of this application may include at least one photovoltaic string and a direct current-direct current boost circuit. The direct current-direct current boost circuit is connected to the at least one photovoltaic string, and is configured to perform boost processing on a voltage supplied by the at least one photovoltaic string. Output ends of the direct current-direct current boost circuit may serve as the two electrodes of the first power supply and are respectively connected to the first input end and the second input end of the RSCC, to supply an input voltage to the RSCC.

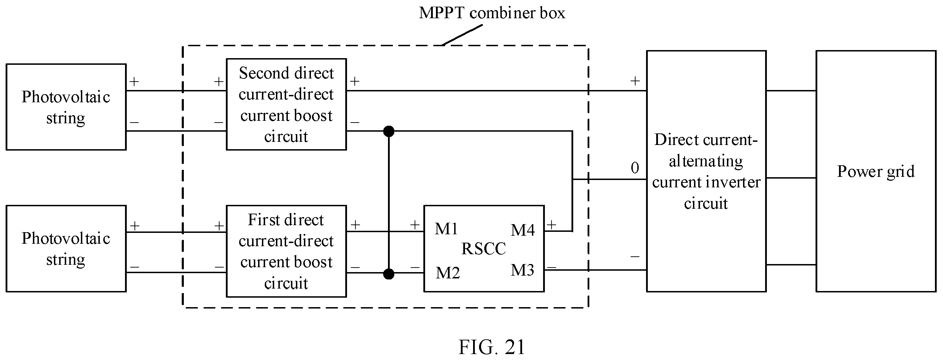

This application further provides a photovoltaic system. As shown in FIG. 21, the system includes at least two photovoltaic strings, a maximum power point tracking (Maximum Power Point Tracking, MPPT) combiner box, a direct current-alternating current inverter circuit, a cable, and the like. An output end of the direct current-alternating current inverter circuit is connected to a power grid. The photovoltaic system further includes a control circuit. The control circuit may control the photovoltaic strings, the MPPT combiner box, and the direct current-alternating current inverter circuit.

The MPPT combiner box may include two direct current-direct current boost circuits and one RSCC. Each direct current-direct current boost circuit is connected to at least one photovoltaic string. A positive input end of the direct current-direct current boost circuit is connected to a positive electrode of the photovoltaic string. A negative input end of the direct current-direct current boost circuit is connected to a negative electrode of the photovoltaic string. The RSCC may be any RSCC provided in the foregoing embodiments. A switch unit in the RSCC is connected to the control circuit.

A positive output end of one of the two direct current-direct current boost circuits is connected to a positive input end of the direct current-alternating current inverter circuit. For ease of description, the two direct current-direct current boost circuits are denoted as a first direct current-direct current boost circuit and a second direct current-direct current boost circuit. A positive output end of the second direct current-direct current boost circuit is connected to the positive input end of the direct current-alternating current inverter circuit. A negative output end of the second direct current-direct current boost circuit is connected to a zero-level endend of the direct current-alternating current inverter circuit.

A positive input end M1 of the RSCC is connected to a positive output end of the first direct current-direct current boost circuit. A negative input end M2 of the RSCC is separately connected to a negative output end of the first direct current-direct current boost circuit and the negative output end of the second direct current-direct current boost circuit. A positive output end M4 of the RSCC is separately connected to the negative output end of the second direct current-direct current boost circuit and the zero-level endend of the direct current-alternating current inverter circuit. A negative output end M3of the RSCC is connected to a negative input end of the direct current-alternating current inverter circuit.

In this embodiment of this application, both the negative input end M2 and the positive output end M4 of the RSCC are connected to the negative output end of the second direct current-direct current boost circuit. The negative input end M2 and the positive output end M4 of the RSCC may be a same endpoint, for example, the second input end S2 of the RSCC 31 in the foregoing embodiments. The positive input end M1 of the RSCC may be the first input end S1 of the RSCC 31. The negative output end M3 of the RSCC may be the output end S3 of the RSCC 31. The first direct current-direct current boost circuit and a photovoltaic string connected to the first direct current-direct current boost circuit may serve as a power supply to supply an input voltage to the RSCC.

The photovoltaic string connected to the first direct current-direct current boost circuit and the first direct current-direct current boost circuit may serve as the first power supply in the foregoing embodiments to supply electric energy to the RSCC. In the photovoltaic system provided in this embodiment of this application, the RSCC may be configured to convert the input voltage supplied by the first direct current-direct current boost circuit into a target voltage with an opposite polarity, to protect performance of an element of the photovoltaic string connected to the first direct current-direct current boost circuit.

It should be understood that, in the photovoltaic system provided in this embodiment of this application, the first direct current-direct current boost circuit and the photovoltaic string connected to the first direct current-direct current boost circuit may be considered as the first power supply in the foregoing embodiments, to supply an input voltage to the RSCC connected to the first direct current-direct current boost circuit. In other words, the photovoltaic system provided in this embodiment of this application may include the conversion circuit provided in the foregoing embodiments.

The MPPT combiner box and the direct current-alternating current inverter circuit in the photovoltaic system provided in this application may form a high-voltage string inverter. The photovoltaic system provided in this application may also be considered as a system including a high-voltage string inverter.

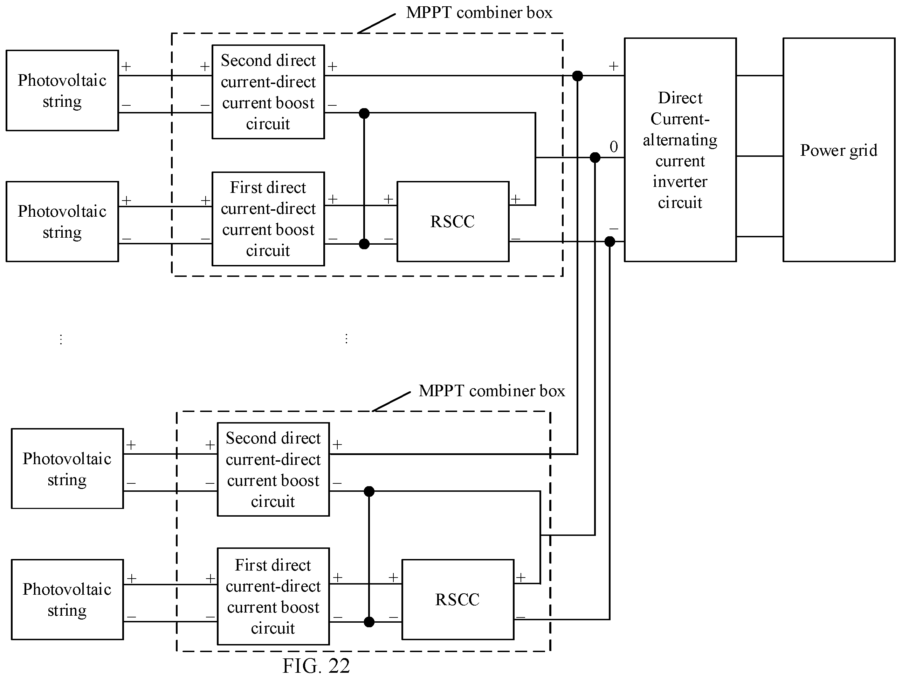

In a possible implementation, as shown in FIG. 22, the photovoltaic system may include a direct current-alternating current inverter circuit, a plurality of MPPT combiner boxes, and a plurality of photovoltaic strings. The photovoltaic system may also be referred to as a photovoltaic system based on a high-voltage string inverter. Each MPPT combiner box includes an RSCC and two direct current-direct current boost circuits. The two direct current-direct current boost circuits are a second direct current-direct current boost circuit and a first direct current-direct current boost circuit. A positive output end of the RSCC in each MPPT combiner box is connected to a zero-level endend of the direct current-alternating current inverter circuit, and a negative output end of the RSCC is connected to a negative input end of the direct current-alternating current inverter circuit. A positive output end of the second direct current-direct current boost circuit in each MPPT combiner box is connected to a positive input end of the direct current-alternating current inverter circuit.

Before the photovoltaic system operates, the RSCC in each MPPT combiner box is precharged, so that performance of elements such as an output filter capacitor of the RSCC can be protected, and operating performance of the RSCC can also be ensured, thereby protecting operating performance of the photovoltaic system. In addition, the RSCC is precharged without adding additional elements, thereby increasing power density of the RSCC, reducing complexity of the photovoltaic system, and simplifying a control procedure of the photovoltaic system.

The photovoltaic system and the photovoltaic system provided in this embodiment of this application may be applied to an application scenario of a large-sized photovoltaic station, an application scenario of a small- or medium-sized distributed power station, and an application scenario of a household photovoltaic system. The photovoltaic system and the photovoltaic power generating system may convert light energy into a direct current, and then convert the direct current into an alternating current and supply the alternating current to a load or a power grid, and may also be referred to as a photovoltaic inversion system or a photovoltaic inverter system.

## Claims

1. A conversion circuit, comprising a first power supply(32), a resonant switched capacitor converter, RSCC(31), and a control circuit(33), wherein
the RSCC(31) comprises a switch unit(301), an output filter unit(304), a first input end S1, a second input end S2, and an output end S3, the switch unit(301) is connected between the first input end S1 and the second input end S2, and the output filter unit(304) is connected between the second input end S2 and the output end S3;
one electrode of the first power supply(32) is connected to the first input end S1, the other electrode of the first power supply(32) is connected to the second input end S2, and the first power supply(32) is configured to supply an input voltage to the RSCC(31); and
the control circuit(33) is connected to the switch unit(301), and is configured to: before controlling the RSCC(31) to operate, control the switch unit(301) in the RSCC to transmit, to the output filter unit(304), electric energy supplied by the first power supply(32),
wherein the RSCC(31) further comprises a resonant unit(302) and a clamping unit(303), wherein the clamping unit(303) and the output filter unit(304) are connected in parallel, the switch unit(301) is connected to an end of the resonant unit (302), and another end of the resonant unit(302) is connected to the clamping unit(303); and
when controlling the switch unit(301) in the RSCC(31) to transmit, to the output filter unit(304), the electric energy supplied by the first power supply(32), the control circuit(33) is specifically configured to:
control the switch unit(301) to transmit, to the resonant unit(302), the electric energy supplied by the first power supply(32); and
control the switch unit(301) to transmit the electric energy in the resonant unit(302) to the output filter unit(304).

2. The circuit according to claim 1, wherein when the control circuit(33) controls the switch unit(301) to transmit, to the resonant unit(302), the electric energy supplied by the first power supply(32), the first power supply(32), the switch unit(301), the resonant unit(302), and the clamping unit(303) form a first path, an open circuit occurs between the switch unit(301) and the second input end S2, and an open circuit occurs between the clamping unit(303) and the output end S3; and
when the control circuit(33) controls the switch unit(301) to transmit the electric energy in the resonant unit(302) to the output filter unit(304), the switch unit(301), the resonant unit(302), the clamping unit(303), and the output filter unit(304) form a second path, and an open circuit occurs between the clamping unit(303) and the second input end S2.

3. The circuit according to claim 1 or 2, wherein the switch unit(301) comprises a first switch and a second switch that are connected in series, an end of the first switch is connected to the first input end S1, another end of the first switch is connected to an end of the second switch, and another end of the second switch is connected to the second input end S2;
when the control circuit(33) controls the switch unit(301) to transmit, to the resonant unit(302), the electric energy supplied by the first power supply(32), the control circuit(33) is specifically configured to:
control the first switch to be switched on and the second switch to be switched off; and
when the control circuit(33) controls the switch unit(301) to transmit the electric energy in the resonant unit(302) to the output filter unit(304), the control circuit(33) is specifically configured to:
control the first switch to be switched off and the second switch to be switched on.

4. The circuit according to claim 1, wherein the RSCC(31) further comprises an input filter unit(305), the input filter unit(305) and the switch unit(301) are connected in parallel, and the input filter unit is configured to store the electric energy supplied by the first power supply(32);
the input filter unit(305) comprises a first input filter subunit(305N1) and a second input filter subunit(305N2), the first input filter subunit(305N1) and the second input filter subunit(305N2) are connected in series, and an end at which the first input filter subunit(305N1) and the second input filter subunit(305N2) are connected is connected to the switch unit(301); and
when controlling the switch unit(301) to transmit, to the resonant unit(302), the electric energy supplied by the first power supply(32), the control circuit(33) is specifically configured to:
control the switch unit(301) to transmit, to the resonant unit(302), electric energy supplied by the first power supply(32) to the first input filter subunit(305N1); or
control the switch unit(301) to transmit, to the resonant unit(302), electric energy supplied by the first power supply(32) to the first input filter subunit(305N1) and electric energy supplied by the first power supply(32) to the second input filter subunit(305N2).

5. The circuit according to claim 4, wherein when the control circuit(33) controls the switch unit(301) to transmit, to the resonant unit(302), the electric energy supplied by the first power supply(32) to the first input filter subunit(305N1), a third path is formed by the first input filter subunit(305N1), the switch unit(301), the resonant unit(302), and the clamping unit(303), an open circuit occurs between the switch unit(301) and the first input end S1, an open circuit occurs between the switch unit(301) and the second input end S2, and an open circuit occurs between the clamping unit(303) and the output filter unit(304); and
when the control circuit(33) controls the switch unit(301) to transmit, to the resonant unit(302), the electric energy supplied by the first power supply(32) to the first input filter subunit(305N1) and the electric energy supplied by the first power supply(32) to the second input filter subunit(305N2), a fourth path is formed by the first input filter subunit(305N1), the second input filter subunit(305N2), the switch unit(301), the resonant unit(302), and the clamping unit(303), an open circuit occurs between the switch unit(301) and the second input end S2, and an open circuit occurs between the clamping unit(303) and the output filter unit(304).

6. The circuit according to claim 4, wherein the control circuit(33) is further configured to control the switch unit(301) to transmit the electric energy in the first input filter subunit(305N1) to the output filter unit(304).

7. The circuit according to any one of claims 4 to 6, wherein when the control circuit(33) controls the switch unit(301) to transmit the electric energy in the resonant unit(302) to the output filter unit(304), the resonant unit(302), the switch unit(301), the output filter unit(304), and the clamping unit(303) form a fifth path, an open circuit occurs between the switch unit(301) and the first input filter subunit(305N1), and an open circuit occurs between the switch unit(301) and the second input end S2.

8. The circuit according to claim 6, wherein when the control circuit(33) controls the switch unit(301) to transmit the electric energy in the first input filter subunit(305N1) to the output filter unit(304), the first input filter subunit(305N1), the switch unit(301), the resonant unit(302), the clamping unit(303), and the output filter unit(304) form a sixth path, an open circuit occurs between the switch unit(301) and the second input end S2, an open circuit occurs between the switch unit(301) and the first input end S1, and an open circuit occurs between the clamping unit(303) and the second input end S2.

9. The circuit according to any one of claims 4 to 8, wherein the switch unit (301) comprises a first diode and a second diode that are connected in series, and a third switch, a fourth switch, a fifth switch, and a sixth switch that are sequentially connected in series; a cathode of the first diode is connected to a connection point between the third switch and the fourth switch, and an anode of the first diode is separately connected to a cathode of the second diode, the first input filter subunit, and the second input filter subunit; and an anode of the second diode is connected to a connection point between the fifth switch and the sixth switch.

10. A conversion circuit precharge control method, applied to a conversion circuit, wherein the conversion circuit comprises a first power supply(32) and a resonant switched capacitor converter, RSCC(31), the RSCC(31) comprises a switch unit(301), an output filter unit(304), a first input end S1, a second input end S2, and an output end S3,
wherein the switch unit(301) is connected between the first input end S1 and the second input end S2, and the output filter unit(304) is connected between the second input end S2 and the output end S3;
wherein one electrode of the first power supply(32) is connected to the first input end S1, the other electrode of the first power supply(32) is connected to the second input end S2, and the first power supply(32) is configured to supply an input voltage to the RSCC(31), and
wherein the method comprises:
before controlling the RSCC(31) to operate, controlling the switch unit(301) to transmit, to the output filter unit(304), electric energy supplied by the first power supply(32); and
if it is determined that a voltage of the output filter unit(304) is greater than a preset threshold, controlling the RSCC(31) to operate,
wherein the RSCC(31) further comprises a resonant unit(302) and a clamping unit(303), wherein the clamping unit(303) and the output filter unit(304) are connected in parallel, the switch unit(301) is connected to an end of the resonant unit (302), and another end of the resonant unit(302) is connected to the clamping unit(303),
wherein the controlling the switch unit(301) to transmit, to the output filter unit(304), electric energy supplied by the first power supply(32) comprises:
controlling the switch unit(301) to transmit, to the resonant unit(302), the electric energy supplied by the first power supply(32); and
controlling the switch unit(301) to transmit the electric energy in the resonant unit(302) to the output filter unit(304).

11. The method according to claim 10, wherein the RSCC(31) further comprises an input filter unit(305), the input filter unit(305) comprises a first input filter subunit(305N1) and a second input filter subunit(305N2), and the method further comprises:
controlling the switch unit(301) to transmit electric energy in the first input filter subunit(305N1) to the output filter unit(304).

12. The method according to claim 11, wherein the controlling the switch unit(301) to transmit, to the resonant unit(302), the electric energy supplied by the first power supply(32) comprises:
controlling the switch unit(301) to transmit, to the resonant unit(302), electric energy supplied by the first power supply(32) to the first input filter subunit(305N1); or
controlling the switch unit(301) to transmit, to the resonant unit(302), electric energy supplied by the first power supply(32) to the first input filter subunit(305N1) and electric energy supplied by the first power supply(32) to the second input filter subunit(305N2).

13. A photovoltaic system, comprising at least one conversion circuit according to claim 1, at least one second direct current-direct current boost circuit, and a direct current-alternating current inverter circuit, wherein
a positive output end of each second direct current-direct current boost circuit is connected to a positive input end of the direct current-alternating current inverter circuit, a negative output end of the second direct current-direct current boost circuit is separately connected to a second input end S2 of an RSCC(31) in one conversion circuit and a zero-level end of the direct current-alternating current inverter circuit, and negative output ends of second direct current-direct current boost circuits are connected to second input end S2 of RSCC(31) in different conversion circuits;
an output end S3 of an RSCC(31) in each conversion circuit is connected to a negative input end of the direct current-alternating current inverter circuit;
a positive input end of each second direct current-direct current boost circuit is connected to a positive electrode of at least one photovoltaic string, and a negative input end of the second direct current-direct current boost circuit is connected to a negative electrode of the at least one photovoltaic string;
each second direct current-direct current boost circuit is configured to perform boost processing on a voltage supplied by a connected photovoltaic string to obtain a first input voltage, and supply the first input voltage to the direct current-alternating current inverter circuit;
during operating, the RSCC(31) in the conversion circuit supplies a second input voltage to the direct current-alternating current inverter circuit, wherein a polarity of the second input voltage is opposite to a polarity of the first input voltage; and
an output end of the direct current-alternating current inverter circuit is connected to a power grid, to convert the first input voltage and the second input voltage into alternating-current voltages, and supply the alternating-current voltages to the power grid.

## Patentansprüche

1. Umwandlungsschaltung, umfassend eine erste Leistungsversorgung (32), einen resonanten geschalteten Kondensatorwandler, RSCC (31), und eine Steuerschaltung (33), wobei
der RSCC (31) eine Schalteinheit (301), eine Ausgangsfiltereinheit (304), ein erstes Eingangsende S1, ein zweites Eingangsende S2 und ein Ausgangsende S3 umfasst, die Schalteinheit (301) zwischen dem ersten Eingangsende S1 und dem zweiten Eingangsende S2 angeschlossen ist und die Ausgangsfiltereinheit (304) zwischen dem zweiten Eingangsende S2 und dem Ausgangsende S3 angeschlossen ist;
eine Elektrode der ersten Leistungsversorgung (32) mit dem ersten Eingangsende S1 verbunden ist, die andere Elektrode der ersten Leistungsversorgung (32) mit dem zweiten Eingangsende S2 verbunden ist und die erste Leistungsversorgung (32) konfiguriert ist zum Zuführen einer Eingangsspannung zu dem RSCC (31); und
die Steuerschaltung (33) mit der Schalteinheit (301) verbunden ist und konfiguriert ist zum: vor dem Steuern des RSCC (31), betrieben zu werden, Steuern der Schalteinheit (301) in dem RSCC, durch die erste Leistungsversorgung (32) zugeführte elektrische Energie zu der Ausgangsfiltereinheit (304) zu übertragen,
wobei der RSCC (31) ferner eine Resonanzeinheit (302) und eine Klemmeinheit (303) umfasst, wobei die Klemmeinheit (303) und die Ausgangsfiltereinheit (304) parallel verbunden sind, die Schalteinheit (301) mit einem Ende der Resonanzeinheit (302) verbunden ist und ein anderes Ende der Resonanzeinheit (302) mit der Klemmeinheit (303) verbunden ist; und
wenn die Schalteinheit (301) in dem RSCC (31) gesteuert wird, die durch die erste Leistungsversorgung (32) zugeführte elektrische Energie zu der Ausgangsfiltereinheit (304) zu übertragen, die Steuerschaltung (33) spezifisch konfiguriert ist zum:
Steuern der Schalteinheit (301), die durch die erste Leistungsversorgung (32) zugeführte elektrische Energie zu der Resonanzeinheit (302) zu übertragen; und
Steuern der Schalteinheit (301), die elektrische Energie in der Resonanzeinheit (302) zu der Ausgangsfiltereinheit (304) zu übertragen.

2. Schaltung nach Anspruch 1, wobei, wenn die Steuerschaltung (33) die Schalteinheit (301) steuert, die durch die erste Leistungsversorgung (32) zugeführte elektrische Energie zu der Resonanzeinheit (302) zu übertragen, die erste Leistungsversorgung (32), die Schalteinheit (301), die Resonanzeinheit (302), und die Klemmeinheit (303) einen ersten Pfad bilden, eine offene Schaltung zwischen der Schalteinheit (301) und dem zweiten Eingangsende S2 vorkommt und eine offene Schaltung zwischen der Klemmeinheit (303) und dem Ausgangsende S3 vorkommt; und
wenn die Steuerschaltung (33) die Schalteinheit (301) steuert, die elektrische Energie in der Resonanzeinheit (302) zu der Ausgangsfiltereinheit (304) zu übertragen, die Schalteinheit (301), die Resonanzeinheit (302), die Klemmeinheit (303) und die Ausgangsfiltereinheit (304) einen zweiten Pfad bilden und eine offene Schaltung zwischen der Klemmeinheit (303) und dem zweiten Eingangsende S2 vorkommt.

3. Schaltung nach Anspruch 1 oder 2, wobei die Schalteinheit (301) einen ersten Schalter und einen zweiten Schalter umfasst, die in Reihe verbunden sind, ein Ende des ersten Schalters mit dem ersten Eingangsende S1 verbunden ist, ein anderes Ende des ersten Schalters mit einem Ende des zweiten Schalters verbunden ist und ein anderes Ende des zweiten Schalters mit dem zweiten Eingangsende S2 verbunden ist;
wenn die Steuerschaltung (33) die Schalteinheit (301) steuert, die durch die erste Leistungsversorgung (32) zugeführte elektrische Energie zu der Resonanzeinheit (302) zu übertragen, die Steuerschaltung (33) spezifisch konfiguriert ist zum:
Steuern des ersten Schalters, eingeschaltet zu werden, und des zweiten Schalters, ausgeschaltet zu werden; und
wenn die Steuerschaltung (33) die Schalteinheit (301) steuert, die elektrische Energie in der Resonanzeinheit (302) zu der Ausgangsfiltereinheit (304) zu übertragen, die Steuerschaltung (33) spezifisch konfiguriert ist zum:
Steuern des ersten Schalters, ausgeschaltet zu werden, und des zweiten Schalters, eingeschaltet zu werden.

4. Schaltung nach Anspruch 1, wobei der RSCC (31) ferner eine Eingangsfiltereinheit (305) umfasst, die Eingangsfiltereinheit (305) und die Schalteinheit (301) parallel verbunden sind und die Eingangsfiltereinheit konfiguriert ist zum Speichern der durch die erste Leistungsversorgung (32) zugeführten elektrischen Energie;
die Eingangsfiltereinheit (305) eine erste Eingangsfilteruntereinheit (305N1) und eine zweite Eingangsfilteruntereinheit (305N2) umfasst, die erste Eingangsfilteruntereinheit (305N1) und die zweite Eingangsfilteruntereinheit (305N2) in Reihe verbunden sind und ein Ende, an dem die erste Eingangsfilteruntereinheit (305N1) und die zweite Eingangsfilteruntereinheit (305N2) verbunden sind, mit der Schalteinheit (301) verbunden ist; und
wenn die Schalteinheit (301) gesteuert wird, die durch die erste Leistungsversorgung (32) zugeführte elektrische Energie zu der Resonanzeinheit (302) zu übertragen, die Steuerschaltung (33) spezifisch konfiguriert ist zum:
Steuern der Schalteinheit (301), durch die erste Leistungsversorgung (32) zu der ersten Eingangsfilteruntereinheit (305N1) zugeführte elektrische Energie zu der Resonanzeinheit (302) zu übertragen; oder
Steuern der Schalteinheit (301), durch die erste Leistungsversorgung (32) zu der ersten Eingangsfilteruntereinheit (305N1) zugeführte elektrische Energie und durch die erste Leistungsversorgung (32) zu der zweiten Eingangsfilteruntereinheit (305N2) zugeführte elektrische Energie zu der Resonanzeinheit (302) zu übertragen.

5. Schaltung nach Anspruch 4, wobei, wenn die Steuerschaltung (33) die Schalteinheit (301) steuert, die durch die erste Leistungsversorgung (32) zu der ersten Eingangsfilteruntereinheit (305N1) zugeführte elektrische Energie zu der Resonanzeinheit (302) zu übertragen, ein dritter Pfad durch die erste Eingangsfilteruntereinheit (305N1), die Schalteinheit (301), die Resonanzeinheit (302) und die Klemmeinheit (303) gebildet wird, eine offene Schaltung zwischen der Schalteinheit (301) und dem ersten Eingangsende S1 vorkommt, eine offene Schaltung zwischen der Schalteinheit (301) und dem zweiten Eingangsende S2 vorkommt und eine offene Schaltung zwischen der Klemmeinheit (303) und der Ausgangsfiltereinheit (304) vorkommt; und
wenn die Steuerschaltung (33) die Schalteinheit (301) steuert, die durch die erste Leistungsversorgung (32) zu der ersten Eingangsfilteruntereinheit (305N1) zugeführte elektrische Energie und die durch die erste Leistungsversorgung (32) zu der zweiten Eingangsfilteruntereinheit (305N2) zugeführte elektrische Energie zu der Resonanzeinheit (302) zu übertragen, ein vierter Pfad durch die erste Eingangsfilteruntereinheit (305N1), die zweite Eingangsfilteruntereinheit (305N2), die Schalteinheit (301), die Resonanzeinheit (302) und die Klemmeinheit (303) gebildet wird, eine offene Schaltung zwischen der Schalteinheit (301) und dem zweiten Eingangsende S2 vorkommt und eine offene Schaltung zwischen der Klemmeinheit (303) und der Ausgangsfiltereinheit (304) vorkommt.

6. Schaltung nach Anspruch 4, wobei die Steuerschaltung (33) ferner konfiguriert ist zum Steuern der Schalteinheit (301), die elektrische Energie in der ersten Eingangsfilteruntereinheit (305N1) zu der Ausgangsfiltereinheit (304) zu übertragen.

7. Schaltung nach einem der Ansprüche 4 bis 6, wobei, wenn die Steuerschaltung (33) die Schalteinheit (301) steuert, die elektrische Energie in der Resonanzeinheit (302) zu der Ausgangsfiltereinheit (304) zu übertragen, die Resonanzeinheit (302), die Schalteinheit (301), die Ausgangsfiltereinheit (304) und die Klemmeinheit (303) einen fünften Pfad bilden, eine offene Schaltung zwischen der Schalteinheit (301) und der ersten Eingangsfilteruntereinheit (305N1) vorkommt und eine offene Schaltung zwischen der Schalteinheit (301) und dem zweiten Eingangsende S2 vorkommt.

8. Schaltung nach Anspruch 6, wobei, wenn die Steuerschaltung (33) die Schalteinheit (301) steuert, die elektrische Energie in der ersten Eingangsfilteruntereinheit (305N1) zu der Ausgangsfiltereinheit (304) zu übertragen, die erste Eingangsfilteruntereinheit (305N1), die Schalteinheit (301), die Resonanzeinheit (302), die Klemmeinheit (303) und die Ausgangsfiltereinheit (304) einen sechsten Pfad bilden, eine offene Schaltung zwischen der Schalteinheit (301) und dem zweiten Eingangsende S2 vorkommt, eine offene Schaltung zwischen der Schalteinheit (301) und dem ersten Eingangsende S1 vorkommt und eine offene Schaltung zwischen der Klemmeinheit (303) und dem zweiten Eingangsende S2 vorkommt.

9. Schaltung nach einem der Ansprüche 4 bis 8, wobei die Schalteinheit (301) eine erste Diode und eine zweite Diode, die in Reihe verbunden sind, und einen dritten Schalter, einen vierten Schalter, einen fünften Schalter und einen sechsten Schalter, die aufeinanderfolgend in Reihe verbunden sind, umfasst; eine Kathode der ersten Diode mit einem Verbindungspunkt zwischen dem dritten Schalter und dem vierten Schalter verbunden ist und eine Anode der ersten Diode mit einer Kathode der zweiten Diode, der ersten Eingangsfilteruntereinheit und der zweiten Eingangsfilteruntereinheit getrennt verbunden ist; und eine Anode der zweiten Diode mit einem Verbindungspunkt zwischen dem fünften Schalter und dem sechsten Schalter verbunden ist.

10. Umwandlungsschaltung-Vorladungssteuerverfahren, angewandt auf eine Umwandlungsschaltung, wobei die Umwandlungsschaltung eine erste Leistungsversorgung (32) und einen resonanten geschalteten Kondensatorwandler, RSCC (31) umfasst, der RSCC (31) eine Schalteinheit (301), eine Ausgangsfiltereinheit (304), ein erstes Eingangsende S1, ein zweites Eingangsende S2 und ein Ausgangsende S3 umfasst,
wobei die Schalteinheit (301) zwischen dem ersten Eingangsende S1 und dem zweiten Eingangsende S2 angeschlossen ist und die Ausgangsfiltereinheit (304) zwischen dem zweiten Eingangsende S2 und dem Ausgangsende S3 angeschlossen ist;
wobei eine Elektrode der ersten Leistungsversorgung (32) mit dem ersten Eingangsende S1 verbunden ist, die andere Elektrode der ersten Leistungsversorgung (32) mit dem zweiten Eingangsende S2 verbunden ist und die erste Leistungsversorgung (32) konfiguriert ist zum Zuführen einer Eingangsspannung zu dem RSCC (31), und
wobei das Verfahren Folgendes umfasst:
vor dem Steuern des RSCC (31), betrieben zu werden, Steuern der Schalteinheit (301), durch die erste Leistungsversorgung (32) zugeführte elektrische Energie zu der Ausgangsfiltereinheit (304) zu übertragen; und
wenn bestimmt wird, dass eine Spannung der Ausgangsfiltereinheit (304) größer als ein im Voraus eingestellter Schwellenwert ist, Steuern des RSCC (31), betrieben zu werden,
wobei der RSCC (31) ferner eine Resonanzeinheit (302) und eine Klemmeinheit (303) umfasst, wobei die Klemmeinheit (303) und die Ausgangsfiltereinheit (304) parallel verbunden sind, die Schalteinheit (301) mit einem Ende der Resonanzeinheit (302) verbunden ist und ein anderes Ende der Resonanzeinheit (302) mit der Klemmeinheit (303) verbunden ist,
wobei das Steuern der Schalteinheit (301), durch die erste Leistungsversorgung (32) zugeführte elektrische Energie zu der Ausgangsfiltereinheit (304) zu übertragen, Folgendes umfasst:
Steuern der Schalteinheit (301), die durch die erste Leistungsversorgung (32) zugeführte elektrische Energie zu der Resonanzeinheit (302) zu übertragen; und Steuern der Schalteinheit (301), die elektrische Energie in der Resonanzeinheit (302) zu der Ausgangsfiltereinheit (304) zu übertragen.

11. Verfahren nach Anspruch 10, wobei der RSCC (31) ferner eine Eingangsfiltereinheit (305) umfasst, die Eingangsfiltereinheit (305) eine erste Eingangsfilteruntereinheit (305N1) und eine zweite Eingangsfilteruntereinheit (305N2) umfasst und das Verfahren ferner Folgendes umfasst:
Steuern der Schalteinheit (301), elektrische Energie in der ersten Eingangsfilteruntereinheit (305N1) zu der Ausgangsfiltereinheit (304) zu übertragen.

12. Verfahren nach Anspruch 11, wobei das Steuern der Schalteinheit (301), die durch die erste Leistungsversorgung (32) zugeführte elektrische Energie zu der Resonanzeinheit (302) zu übertragen, Folgendes umfasst:
Steuern der Schalteinheit (301), durch die erste Leistungsversorgung (32) zu der ersten Eingangsfilteruntereinheit (305N1) zugeführte elektrische Energie zu der Resonanzeinheit (302) zu übertragen; oder
Steuern der Schalteinheit (301), durch die erste Leistungsversorgung (32) zu der ersten Eingangsfilteruntereinheit (305N1) zugeführte elektrische Energie und durch die erste Leistungsversorgung (32) zu der zweiten Eingangsfilteruntereinheit (305N2) zugeführte elektrische Energie zu der Resonanzeinheit (302) zu übertragen.

13. Photovoltaiksystem, umfassend mindestens eine Umwandlungsschaltung nach Anspruch 1, mindestens eine zweite Gleichstrom-Gleichstrom-Anhebungsschaltung und eine Gleichstrom-Wechselstrom-Wechselrichterschaltung, wobei
ein positives Ausgangsende jeder zweiten Gleichstrom-Gleichstrom-Anhebungsschaltung mit einem positiven Eingangsende der Gleichstrom-Wechselstrom-Wechselrichterschaltung verbunden ist, ein negatives Ausgangsende der zweiten Gleichstrom-Gleichstrom-Anhebungsschaltung mit einem zweiten Eingangsende S2 eines RSCC (31) in einer Umwandlungsschaltung und einem Nullpegel-Ende der Gleichstrom-Wechselstrom-Wechselrichterschaltung getrennt verbunden ist und negative Ausgangsenden von zweiten Gleichstrom-Gleichstrom-Anhebungsschaltungen mit zweiten Eingangsenden S2 von RSCC (31) in verschiedenen Umwandlungsschaltungen verbunden sind;
ein Ausgangsende S3 eines RSCC (31) in jeder Umwandlungsschaltung mit einem negativen Eingangsende der Gleichstrom-Wechselstrom-Wechselrichterschaltung verbunden ist;
ein positives Eingangsende jeder zweiten Gleichstrom-Gleichstrom-Anhebungsschaltung mit einer positiven Elektrode mindestens eines Photovoltaikstrangs verbunden ist und ein negatives Eingangsende der zweiten Gleichstrom-Gleichstrom-Anhebungsschaltung mit einer negativen Elektrode des mindestens einen Photovoltaikstrangs verbunden ist;
jede zweite Gleichstrom-Gleichstrom-Anhebungsschaltung konfiguriert ist zum Durchführen von Anhebungsverarbeitung an einer durch einen verbundenen Photovoltaikstrang zugeführten Spannung, um eine erste Eingangsspannung zu erlangen, und Zuführen der ersten Eingangsspannung zu der Gleichstrom-Wechselstrom-Wechselrichterschaltung;
während des Betriebs, der RSCC (31) in der Umwandlungsschaltung eine zweite Eingangsspannung zu der Gleichstrom-Wechselstrom-Wechselrichterschaltung zuführt, wobei eine Polarität der zweiten Eingangsspannung einer Polarität der ersten Eingangsspannung entgegengesetzt ist; und
ein Ausgangsende der Gleichstrom-Wechselstrom-Wechselrichterschaltung mit einem Leistungsnetz verbunden ist, um die erste Eingangsspannung und die zweite Eingangsspannung in Wechselstromspannungen umzuwandeln und die Wechselstromspannungen dem Leistungsnetz zuzuführen.

## Revendications

1. Circuit de conversion, comprenant une première alimentation électrique (32), un convertisseur à condensateur commuté résonant, RSCC (31), et un circuit de commande (33), dans lequel
le RSCC (31) comprend une unité de commutation (301), une unité de filtre de sortie (304), une première extrémité d'entrée S1, une seconde extrémité d'entrée S2 et une extrémité de sortie S3, l'unité de commutation (301) est connectée entre la première extrémité d'entrée S1 et la seconde extrémité d'entrée S2, et l'unité de filtre de sortie (304) est connectée entre la seconde extrémité d'entrée S2 et l'extrémité de sortie S3 ; une électrode de la première alimentation électrique (32) est connectée à la première extrémité d'entrée S1, l'autre électrode de la première alimentation électrique (32) est connectée à la seconde extrémité d'entrée S2, et la première alimentation électrique (32) est configurée pour fournir une tension d'entrée au RSCC (31) ; et
le circuit de commande (33) est connecté à l'unité de commutation (301) et est configuré pour : avant de commander au RSCC (31) de fonctionner, commander à l'unité de commutation (301) dans le RSCC de transmettre, à l'unité de filtre de sortie (304), l'énergie électrique fournie par la première alimentation électrique (32),
dans lequel le RSCC (31) comprend en outre une unité résonnante (302) et une unité de serrage (303), dans lequel l'unité de serrage (303) et l'unité de filtre de sortie (304) sont connectées en parallèle, l'unité de commutation (301) est connectée à une extrémité de l'unité résonnante (302), et une autre extrémité de l'unité résonnante (302) est connectée à l'unité de serrage (303) ; et
lors de la commande à l'unité de commutation (301) dans le RSCC (31) de transmettre, à l'unité de filtre de sortie (304), l'énergie électrique fournie par la première alimentation électrique (32), le circuit de commande (33) est configuré spécifiquement pour :
commander à l'unité de commutation (301) de transmettre, à l'unité résonnante (302), l'énergie électrique fournie par la première alimentation électrique (32) ; et commander à l'unité de commutation (301) de transmettre l'énergie électrique dans l'unité résonnante (302) à l'unité de filtre de sortie (304).

2. Circuit selon la revendication 1, dans lequel lorsque le circuit de commande (33) commande à l'unité de commutation (301) de transmettre, à l'unité résonnante (302), l'énergie électrique fournie par la première alimentation électrique (32), la première alimentation électrique (32), l'unité de commutation (301), l'unité résonnante (302) et l'unité de serrage (303) forment un premier trajet, un circuit ouvert se produit entre l'unité de commutation (301) et la seconde extrémité d'entrée S2 et un circuit ouvert se produit entre l'unité de serrage (303) et l'extrémité de sortie S3 ; et
lorsque le circuit de commande (33) commande à l'unité de commutation (301) de transmettre l'énergie électrique dans l'unité résonnante (302) à l'unité de filtre de sortie (304), l'unité de commutation (301), l'unité résonnante (302), l'unité de serrage (303) et l'unité de filtre de sortie (304) forment un deuxième trajet, et un circuit ouvert se produit entre l'unité de serrage (303) et la seconde extrémité d'entrée S2.

3. Circuit selon la revendication 1 ou 2, dans lequel l'unité de commutation (301) comprend un premier commutateur et un deuxième commutateur qui sont connectés en série, une extrémité du premier commutateur est connectée à la première extrémité d'entrée S1, une autre extrémité du premier commutateur est connectée à une extrémité du deuxième commutateur, et une autre extrémité du deuxième commutateur est connectée à la seconde extrémité d'entrée S2 ;
lorsque le circuit de commande (33) commande à l'unité de commutation (301) de transmettre, à l'unité résonnante (302), l'énergie électrique fournie par la première alimentation électrique (32), le circuit de commande (33) est configuré spécifiquement pour :
commander au premier commutateur de s'allumer et au deuxième commutateur de s'éteindre ; et
lorsque le circuit de commande (33) commande à l'unité de commutation (301) de transmettre l'énergie électrique dans l'unité résonnante (302) à l'unité de filtre de sortie (304), le circuit de commande (33) est configuré spécifiquement pour :
commander au premier commutateur de s'éteindre et au deuxième commutateur de s'allumer.

4. Circuit selon la revendication 1, dans lequel le RSCC (31) comprend en outre une unité de filtre d'entrée (305), l'unité de filtre d'entrée (305) et l'unité de commutation (301) sont connectées en parallèle, et l'unité de filtre d'entrée est configurée pour stocker l'énergie électrique fournie par la première alimentation électrique (32) ;
l'unité de filtre d'entrée (305) comprend une première sous-unité de filtre d'entrée (305N1) et une seconde sous-unité de filtre d'entrée (305N2), la première sous-unité de filtre d'entrée (305N1) et la seconde sous-unité de filtre d'entrée (305N2) sont connectées en série, et une extrémité au niveau de laquelle la première sous-unité de filtre d'entrée (305N1) et la seconde sous-unité de filtre d'entrée (305N2) sont connectées est connectée à l'unité de commutation (301) ; et
lors de la commande à l'unité de commutation (301) de transmettre, à l'unité résonnante (302), l'énergie électrique fournie par la première alimentation électrique (32), le circuit de commande (33) est configuré spécifiquement pour :
commander à l'unité de commutation (301) de transmettre, à l'unité résonnante (302), l'énergie électrique fournie par la première alimentation électrique (32) à la première sous-unité de filtre d'entrée (305N1) ; ou
commander à l'unité de commutation (301) de transmettre, à l'unité résonnante (302), l'énergie électrique fournie par la première alimentation électrique (32) à la première sous-unité de filtre d'entrée (305N1) et l'énergie électrique fournie par la première alimentation électrique (32) à la seconde sous-unité de filtre d'entrée (305N2).

5. Circuit selon la revendication 4, dans lequel lorsque le circuit de commande (33) commande à l'unité de commutation (301) de transmettre, à l'unité résonnante (302), l'énergie électrique fournie par la première alimentation électrique (32) à la première sous-unité de filtre d'entrée (305N1), un troisième trajet est formé par la première sous-unité de filtre d'entrée (305N1), l'unité de commutation (301), l'unité résonnante (302) et l'unité de serrage (303), un circuit ouvert se produit entre l'unité de commutation (301) et la première extrémité d'entrée S1, un circuit ouvert se produit entre l'unité de commutation (301) et la seconde extrémité d'entrée S2 et un circuit ouvert se produit entre l'unité de serrage (303) et l'unité de filtre de sortie (304) ; et
lorsque le circuit de commande (33) commande à l'unité de commutation (301) de transmettre, à l'unité résonnante (302), l'énergie électrique fournie par la première alimentation électrique (32) à la première sous-unité de filtre d'entrée (305N1) et l'énergie électrique fournie par la première alimentation électrique (32) à la seconde sous-unité de filtre d'entrée (305N2), un quatrième trajet est formé par la première sous-unité de filtre d'entrée (305N1), la seconde sous-unité de filtre d'entrée (305N2), l'unité de commutation (301), l'unité résonnante (302) et l'unité de serrage (303), un circuit ouvert se produit entre l'unité de commutation (301) et la seconde extrémité d'entrée S2, et un circuit ouvert se produit entre l'unité de serrage (303) et l'unité de filtre de sortie (304).

6. Circuit selon la revendication 4, dans lequel le circuit de commande (33) est configuré en outre pour commander à l'unité de commutation (301) de transmettre l'énergie électrique dans la première sous-unité de filtre d'entrée (305N1) à l'unité de filtre de sortie (304).

7. Circuit selon l'une quelconque des revendications 4 à 6, dans lequel lorsque le circuit de commande (33) commande à l'unité de commutation (301) de transmettre l'énergie électrique dans l'unité résonnante (302) à l'unité de filtre de sortie (304), l'unité résonnante (302), l'unité de commutation (301), l'unité de filtre de sortie (304) et l'unité de serrage (303) forment un cinquième trajet, un circuit ouvert se produit entre l'unité de commutation (301) et la première sous-unité de filtre d'entrée (305N1), et un circuit ouvert se produit entre l'unité de commutation (301) et la seconde extrémité d'entrée S2.

8. Circuit selon la revendication 6, dans lequel lorsque le circuit de commande (33) commande à l'unité de commutation (301) de transmettre l'énergie électrique dans la première sous-unité de filtre d'entrée (305N1) à l'unité de filtre de sortie (304), la première sous-unité de filtre d'entrée (305N1), l'unité de commutation (301), l'unité résonnante (302), l'unité de serrage (303) et l'unité de filtre de sortie (304) forment un sixième trajet, un circuit ouvert se produit entre l'unité de commutation (301) et la seconde extrémité d'entrée S2, un circuit ouvert se produit entre l'unité de commutation (301) et la première extrémité d'entrée S1, et un circuit ouvert se produit entre l'unité de serrage (303) et la seconde extrémité d'entrée S2.

9. Circuit selon l'une quelconque des revendications 4 à 8, dans lequel l'unité de commutation (301) comprend une première diode et une seconde diode qui sont connectées en série, et un troisième commutateur, un quatrième commutateur, un cinquième commutateur et un sixième commutateur qui sont connectés de manière séquentielle en série ; une cathode de la première diode est connectée à un point de connexion entre le troisième commutateur et le quatrième commutateur, et une anode de la première diode est connectée séparément à une cathode de la seconde diode, la première sous-unité de filtre d'entrée et la seconde sous-unité de filtre d'entrée ; et une anode de la seconde diode est connectée à un point de connexion entre le cinquième commutateur et le sixième commutateur.

10. Procédé de commande de pré-chargement d'un circuit de conversion, appliqué à un circuit de conversion, dans lequel le circuit de conversion comprend une première alimentation électrique (32) et un convertisseur à condensateur commuté résonant, RSCC (31), le RSCC (31) comprend une unité de commutation (301), une unité de filtre de sortie (304), une première extrémité d'entrée S1, une seconde extrémité d'entrée S2 et une extrémité de sortie S3,
dans lequel l'unité de commutation (301) est connectée entre la première extrémité d'entrée S1 et la seconde extrémité d'entrée S2, et l'unité de filtre de sortie (304) est connectée entre la seconde extrémité d'entrée S2 et l'extrémité de sortie S3 ;
dans lequel une électrode de la première alimentation électrique (32) est connectée à la première extrémité d'entrée S1, l'autre électrode de la première alimentation électrique (32) est connectée à la seconde extrémité d'entrée S2, et la première alimentation électrique (32) est configurée pour fournir une tension d'entrée au RSCC (31), et
dans lequel le procédé comprend :
avant de commander au RSCC (31) de fonctionner, commander à l'unité de commutation (301) de transmettre, à l'unité de filtre de sortie (304), l'énergie électrique fournie par la première alimentation électrique (32) ; et
si on détermine qu'une tension de l'unité de filtre de sortie (304) est supérieure à un seuil prédéfini, commander au RSCC (31) de fonctionner,
dans lequel le RSCC (31) comprend en outre une unité résonnante (302) et une unité de serrage (303), dans lequel l'unité de serrage (303) et l'unité de filtre de sortie (304) sont connectées en parallèle, l'unité de commutation (301) est connectée à une extrémité de l'unité résonnante (302), et une autre extrémité de l'unité résonnante (302) est connectée à l'unité de serrage (303),
dans lequel la commande à l'unité de commutation (301) de transmettre, à l'unité de filtre de sortie (304), l'énergie électrique fournie par la première alimentation électrique (32) comprend :
la commande à l'unité de commutation (301) de transmettre, à l'unité résonnante (302), l'énergie électrique fournie par la première alimentation électrique (32) ; et
la commande à l'unité de commutation (301) de transmettre l'énergie électrique dans l'unité résonnante (302) à l'unité de filtre de sortie (304).

11. Procédé selon la revendication 10, dans lequel le RSCC (31) comprend en outre une unité de filtre d'entrée (305), l'unité de filtre d'entrée (305) comprend une première sous-unité de filtre d'entrée (305N1) et une seconde sous-unité de filtre d'entrée (305N2), et le procédé comprend en outre :
la commande à l'unité de commutation (301) de transmettre l'énergie électrique dans la première sous-unité de filtre d'entrée (305N1) à l'unité de filtre de sortie (304).

12. Procédé selon la revendication 11, dans lequel la commande à l'unité de commutation (301) de transmettre, à l'unité résonnante (302), l'énergie électrique fournie par la première alimentation électrique (32) comprend :
la commande à l'unité de commutation (301) de transmettre, à l'unité résonnante (302), l'énergie électrique fournie par la première alimentation électrique (32) à la première sous-unité de filtre d'entrée (305N1) ; ou
la commande à l'unité de commutation (301) de transmettre, à l'unité résonnante (302), l'énergie électrique fournie par la première alimentation électrique (32) à la première sous-unité de filtre d'entrée (305N1) et l'énergie électrique fournie par la première alimentation électrique (32) à la seconde sous-unité de filtre d'entrée (305N2).

13. Système photovoltaïque, comprenant au moins un circuit de conversion selon la revendication 1, au moins un second circuit amplificateur de courant continu-courant continu et un circuit inverseur de courant alternatif-courant continu, dans lequel une extrémité de sortie positive de chaque second circuit amplificateur de courant continu-courant continu est connectée à une extrémité d'entrée positive du circuit inverseur de courant alternatif-courant continu, une extrémité de sortie négative du second circuit amplificateur de courant continu-courant continu est connectée séparément à une seconde extrémité d'entrée S2 d'un RSCC (31) dans un circuit de conversion et une extrémité de niveau zéro du circuit inverseur de courant alternatif-courant continu, et des extrémités de sortie négatives de seconds circuits amplificateur de courant continu-courant continu sont connectées à une seconde extrémité d'entrée S2 d'un RSCC (31) dans différents circuits de conversion ;
une extrémité de sortie S3 d'un RSCC (31) dans chaque circuit de conversion est connectée à une extrémité d'entrée négative du circuit inverseur de courant alternatif-courant continu ;
une extrémité d'entrée positive de chaque second circuit amplificateur de courant continu-courant continu est connectée à une électrode positive d'au moins une chaîne photovoltaïque, et une extrémité d'entrée négative du second circuit amplificateur de courant continu-courant continu est connectée à une électrode négative de l'au moins une chaîne photovoltaïque ;
chaque second circuit amplificateur de courant continu-courant continu est configuré pour exécuter un traitement d'amplification sur une tension fournie par une chaîne photovoltaïque connectée afin d'obtenir une première tension d'entrée, et fournir la première tension d'entrée au circuit inverseur de courant alternatif-courant continu ; pendant le fonctionnement, le RSCC (31) dans le circuit de conversion fournit une seconde tension d'entrée au circuit inverseur de courant alternatif-courant continu, dans lequel une polarité de la seconde tension d'entrée est opposée à une polarité de la première tension d'entrée ; et
une extrémité de sortie du circuit inverseur de courant alternatif-courant continu est connectée à une grille de puissance, pour convertir la première tension d'entrée et la seconde tension d'entrée en tensions de courant alternatif, et fournir les tensions de courant alternatif à la grille de puissance.
